# EUROPEAN PATENT SPECIFICATION

(11) **EP 3 996 038 B1**
(45) Date of publication and mention of the grant of the patent: **09.12.2026**
(21) Application number: 21205703.8
(22) Date of filing: 29.10.2021
(51) Int. Cl.: G06T 7/00

(54) **INFORMATION PROCESSING APPARATUS, INFORMATION PROCESSING METHOD, AND PROGRAM**
INFORMATIONSVERARBEITUNGSGERÄT, -VERFAHREN UND -PROGRAMM
APPAREIL DE TRAITEMENT D'INFORMATIONS, PROCÉDÉ DE TRAITEMENT D'INFORMATIONS ET PROGRAMME

(30) Priority: 06.11.2020 JP 2020186062; 22.09.2021 JP 2021154360
(43) Date of publication of application: 11.05.2022
(73) Proprietor: CANON KABUSHIKI KAISHA, OHTA-KU Tokyo 146-8501 (JP)
(72) Inventor: MITSUMOTO, Shinichi, Tokyo, 146-8501 (JP); MAMIYA, Satoru, Tokyo, 146-8501 (JP); SHIGETA, Tomoyuki, Tokyo, 146-8501 (JP); OSHIMOTO, Nobuo, Tokyo, 146-8501 (JP); KUNO, Yumiko, Tokyo, 146-8501 (JP)
(74) Representative: Canon Europe Limited

(56) References cited:
- WO-A1-2019/192862
- CN-A- 107 874 772
- KR-B1- 100 983 007
- US-A1- 2017 303 844

## Description

### BACKGROUND OF THE INVENTION

### Field of the Invention

The present invention relates to a technique for determining the quality of a captured image.

### Description of the Related Art

A technique for detecting deformations such as a crack from a captured image in inspecting a structure desirably uses a captured image that is in focus and sharp. Since a high resolution image is desirable for the detection of fine deformations from a range to be inspected, a plurality of high resolution images may be combined into a combined image for use in inspecting a large-scale structure.

Japanese Patent No. 6619761 discusses a technique for determining anomalies such as a missing image among images to be combined, and identifying an image or images to be recaptured based on the presence or absence of an anomaly.

As described above, captured images used in inspecting a structure desirably satisfy predetermined image qualities, such as being properly focused and having high resolution. If the captured images do not satisfy such qualities, image processing for inspection such as deformation detection and combination can fail to be properly performed, resulting in a need for recapturing the images. Recapturing images (hereinafter, may also be referred to as reimaging) costs a lot of labor if the structure is located at a remote place. Image capturing involves preparing materials, or the reimaging image capturing is performed on a different day in particular. Thus, a technique for determining whether the captured images satisfy predetermined image qualities, i.e., whether image recapturing is necessary. Further, it is difficult to appropriately determine such image qualities manually by visual observation.

The technique discussed in Japanese Patent 6619761 identifies an image to be recaptured by detecting a data anomaly such as missing image data while communicating the captured image. However, in a case where the image data is normal even if the image data has low image quality, for example, because the recorded image is not properly focused, or has low resolution, the captured image is not determined to be recaptured. Thus, the reimaging determination according to the conventional technique does not take into account the image quality, and in this respect there is room for improvement.

US 2017/303844 A1 discloses an imaging device for monitoring a skin feature which includes a camera, at least one processor and memory.

WO 2019/192862 A1 discloses methods and systems for obtaining high-quality oral images.

KR 100 983 007 B1 discloses a photo-quality check system and method.

### SUMMARY OF THE INVENTION

According to a first aspect of the present invention, there is provided an information processing apparatus as specified in claims 1 to 23. According to a second aspect of the present invention, there is provided an information processing method as specified in claim 24. According to a third aspect of the present invention, there is provided a program as specified in claim 25.

Further features of the present invention will become apparent from the following description of embodiments with reference to the attached drawings.

According to the present invention, whether to use a captured image for the predetermined image processing can be determined based on the image quality of the captured image.

### BRIEF DESCRIPTION OF THE DRAWINGS

Fig. 1 is a block diagram illustrating an example of a hardware configuration of an information processing apparatus.
Fig. 2 is a flowchart illustrating an example of a processing procedure of the information processing apparatus according to a first embodiment.
Fig. 3 is a flowchart illustrating an example of imaging processing according to the first embodiment.
Figs. 4A and 4B are diagrams illustrating examples of captured images and a combined image.
Figs. 5A, 5B, and 5C are tables illustrating examples of a captured image list.
Fig. 6 is a flowchart illustrating an example of imaging condition determination processing.
Fig. 7 is a flowchart illustrating an example of image quality determination processing.
Figs. 8A and 8B is a diagram illustrating examples of a defocus map.
Fig. 9 is a diagram illustrating an example of an image to be recaptured.
Fig. 10 is a flowchart illustrating an example of imaging processing according to a first modification of the first embodiment.
Fig. 11 is a flowchart illustrating an example of image quality determination processing according to the first modification of the first embodiment.
Fig. 12 is a flowchart illustrating an example of reimaging processing according to a third modification of the first embodiment.
Fig. 13 is an example of a reimaging execution confirmation screen according to the third modification of the first embodiment.
Fig. 14 is a flowchart illustrating an example of image quality determination processing according to a fourth modification of the present embodiment.
Fig. 15 is a diagram illustrating an example of a defocus map on which image quality determination results according to the fourth modification of the first embodiment are superimposed.
Fig. 16 is a diagram illustrating an example of an image quality determination mode selection screen according to the fourth modification of the first embodiment.
Figs. 17A to 17C are diagrams illustrating examples of the defocus map on which image quality determination results according to the fourth modification of the first embodiment are superimposed (other examples of superimposed display).

### DESCRIPTION OF THE EMBODIMENTS

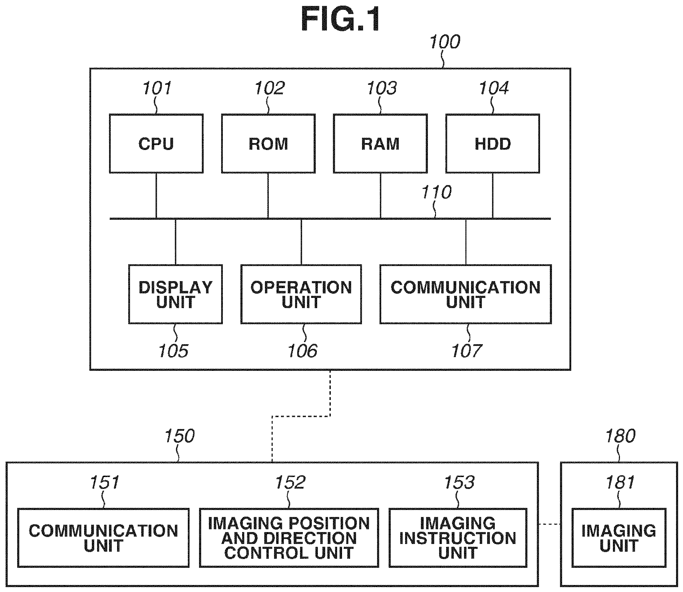

Fig. 1 is a block diagram illustrating an information processing system including an information processing apparatus according to a first embodiment. As illustrated in Fig. 1, the information processing system includes an information processing apparatus 100, an imaging assist apparatus 150, and an imaging apparatus 180. The information processing system performs an information processing method of determining quality of a captured image and determining whether to recapture the image. The information processing system is a system for inspecting a structure based on captured images of the structure. Examples of the structure include a bridge, tunnel, road, building, dam, bank, and electric facility.

The information processing apparatus 100 is an apparatus for controlling entire imaging processing according to the present embodiment. The information processing apparatus 100 includes a central processing unit (CPU) 101, a read-only memory (ROM) 102, a random access memory (RAM) 103, a hard disk drive (HDD) 104, a display unit 105, an operation unit 106, and a communication unit 107. The CPU 101 performs calculations and logical determinations for various types of processing, and controls the components connected to a system bus 110. The ROM 102 is a program memory and stores programs used for control, including various processing procedures to be described below, by the CPU 101. The RAM 103 is used as a temporary storage area such as a main memory and a work area for the CPU 101. The program memory may be implemented by loading the programs from an external storage device connected to the information processing apparatus 100 into the RAM 103.

The HDD 104 is used to store electronic data, such as image data, and programs according to the present embodiment. An external storage device may be used as a device having a similar role. For example, the external storage device may be implemented by a medium (recording medium) and an external storage drive for accessing the medium. Known examples of such a medium include a flexible disk (FD), a compact disc read-only memory (CD-ROM), a digital versatile disc (DVD), a Universal Serial Bus (USB) memory, a magneto-optical (MO) disk, and a flash memory. The external storage device may be a network-connected server apparatus.

The display unit 105 is a device that outputs an image on a display screen. Examples include a liquid crystal display (LCD) and an organic electroluminescence (EL) display (OELD). The display unit 105 may be an external device connected to the information processing apparatus 100 in a wired or wireless manner. The operation unit 106 includes a keyboard and a mouse, and accepts a user's various operations. The communication unit 107 performs wired or wireless bidirectional communication with another information processing apparatus, a communication device, or an external storage device by using conventional communication techniques. For example, the communication unit 107 can include a chip and an antenna for performing public wireless communication. The communication unit 107 may be configured to perform communication by using other wireless communication methods such as a wireless local area network (LAN) and Bluetooth^{®}.

In the present embodiment, the imaging assist apparatus 150 is a camera platform apparatus capable of changing an imaging position and an imaging direction based on control from the information processing apparatus 100. The imaging apparatus 180 to be described below is mounted on the imaging assist apparatus 150. The imaging assist apparatus 150 includes a communication unit 151, an imaging position and direction control unit 152, and an imaging instruction unit 153. The communication unit 151 performs wireless or wired communication with the information processing apparatus 100, and controls the imaging direction and position and issues imaging instructions based on instructions from the information processing apparatus 100. For example, the communication unit 151 can include a chip and an antenna for performing public wireless communication. The communication unit 151 may be configured to perform communication by using other wireless communication methods such as a wireless LAN and Bluetooth^{®}.

The imaging position and direction control unit 152 changes the imaging position and direction of the camera platform apparatus so that an image of an imaging region of an object to be inspected can be captured. The imaging instruction unit 153 controls the imaging apparatus 180 set at the imaging position and direction changed by the imaging position and direction control unit 152 to capture an image.

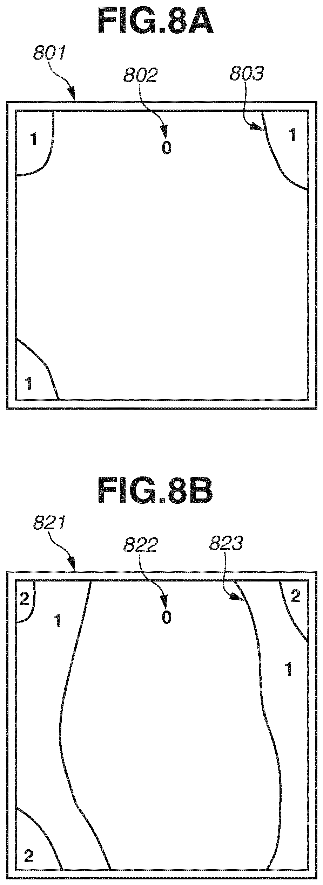

The imaging apparatus 180 is an apparatus for capturing an image based on imaging instruction information received from the information processing apparatus 100 via the imaging assist apparatus 150. The imaging apparatus 180 includes a full image plane phase difference image sensor, and records in-focus degree information (defocus values) of the captured image. Details of the in-focus degree information will be described below with reference to Figs. 8A and 8B. The defocus values are data expressing a spatial (two-dimensional) distribution of defocus amounts in the imaging range. In the following description, the data expressing the spatial distribution of defocus amounts may also be referred to as a defocus map. A defocus amount is the amount of focus deviation from a distance at which the optical system of the imaging apparatus 180 is focused. The defocus values (defocus map) express the defocus amounts of the respective pixels of the image in the form of a spatial distribution.

Each pixel of the full image plane phase difference image sensor of the imaging apparatus 180 includes two photoelectric conversion units, which will be referred to as a split pixel A and a split pixel B. Split pixels A and B, two-dimensionally regularly arranged in the full image plane phase difference image sensor, output an image A and an image B, respectively, as parallax images. An image A+B obtained by adding the image A and the image B is recorded as a recording still image. The defocus amounts are calculated based on phase differences between the parallax images. The full image plane phase difference image sensor will be described to be configured so that the defocus amounts are derived pixel by pixel, whereas defocus amounts may be derived in units of predetermined regions, such as in units of blocks each including a plurality of pixels (e.g., 5 × 5 pixels).

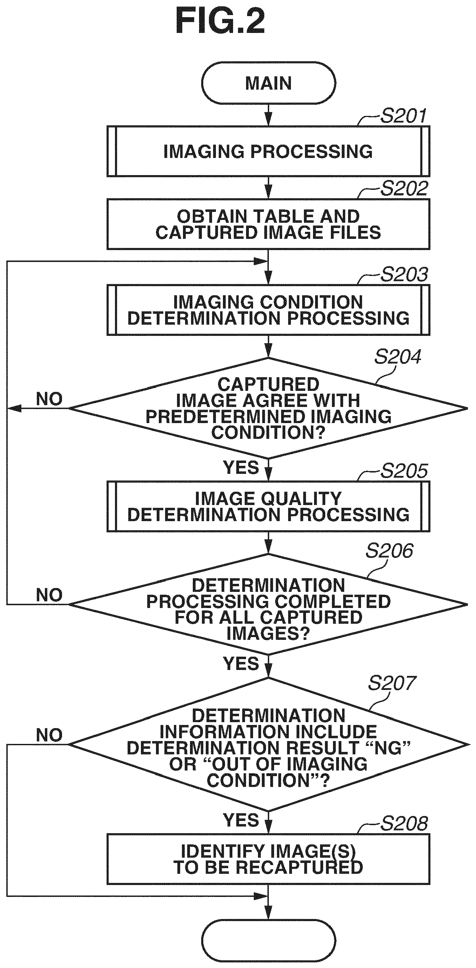

Next, the imaging processing according to the present embodiment will be described. Fig. 2 is a flowchart illustrating a processing procedure of the information processing apparatus 100 according to the present embodiment. The flowchart illustrated in Fig. 2 is started by the information processing apparatus 100 executing an imaging processing control application.

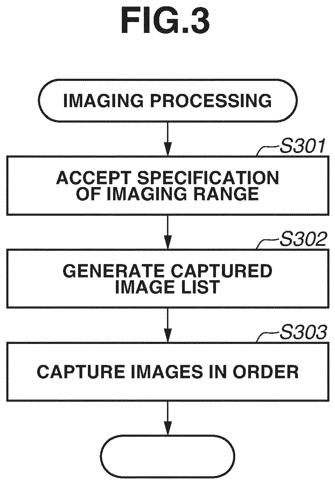

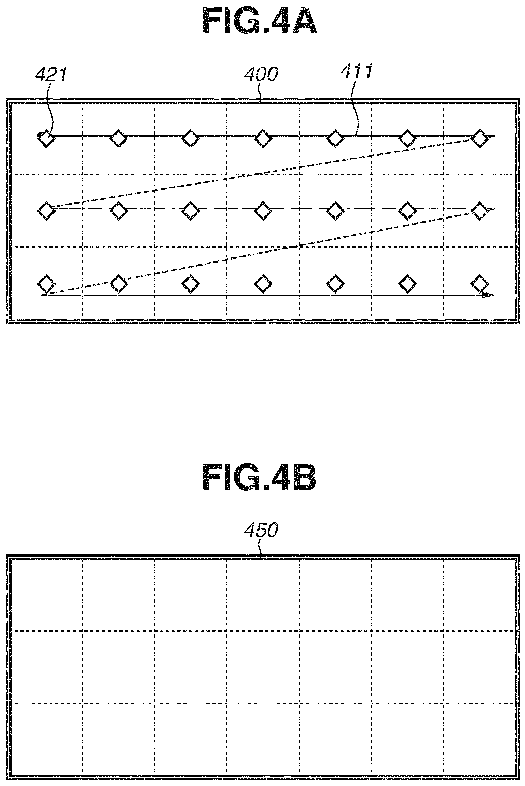

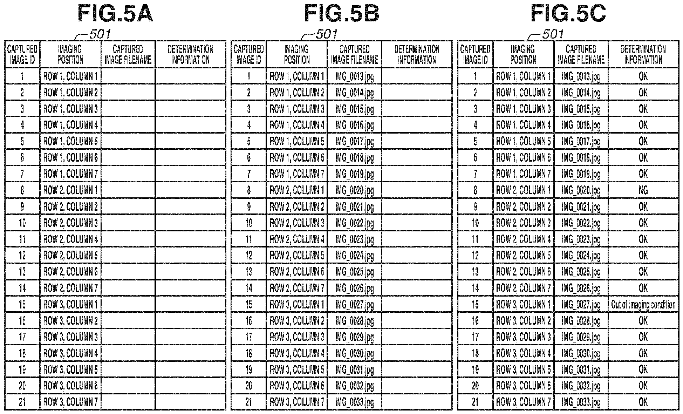

In step S201, the CPU 101 of the information processing apparatus 100 performs imaging processing. The imaging processing illustrated in step S201 is processing to capture images by operating the imaging assist apparatus 150 and the imaging apparatus 180 based on control from the information processing apparatus 100. The imaging processing illustrated in step S201 will be described below with reference to a flowchart of Fig. 3. In step S201, the CPU 101 specifies imaging ranges and imaging positions in order such as illustrated in Fig. 4A, and controls the imaging assist apparatus 150 and makes the imaging apparatus 180 capture images. In step S201, the information processing apparatus 100 receives the specification of the inspection range (imaging range) of the structure from the user, and generates a table 501 illustrated in Fig. 5A. The table 501 is a captured image list including information indicating the imaging ranges or the imaging positions and directions of images corresponding to respective records. In step S201, the information processing apparatus 100 causes the imaging apparatus 180 to capture images in order based on the table 501. The information processing apparatus 100 drives the imaging assist apparatus 150 to control the imaging range of the imaging apparatus 180 based on the table 501 that is the captured image list. With the imaging range determined by the driving of the imaging assist apparatus 150, the information processing apparatus 100 transmits an imaging instruction to capture an image to the imaging apparatus 180 via the imaging assist apparatus 150. The imaging apparatus 180 captures an image upon reception of the imaging instruction. When the capturing of an image is completed, the information processing apparatus 100 receives an imaging completion notification from the imaging assist apparatus 150 or the imaging apparatus 180. Upon receiving the imaging completion notification, the information processing apparatus 100 writes information including a captured image filename into the record of the captured image list corresponding to the imaging. To capture the next image, the information processing apparatus 100 then transmits information for changing the imaging direction by the imaging assist apparatus 150 and the imaging instruction to the imaging assist apparatus 150 and the imaging apparatus 180, and then an image corresponding to the next record of the captured image list is captured. Imaging is thus repeated until the capturing of the images corresponding to the captured image list generated in this way is completed. If the capturing of all the images corresponding to the captured image list is completed, the imaging processing ends. When the imaging processing ends, the table 501 illustrated in Fig. 5A has been updated into the table 501 illustrated in Fig. 5B in which the captured image filenames are recorded. While the information processing apparatus 100 is described to transmit the information for driving the imaging assist apparatus 150 and the imaging instruction, image by image, it is not limited thereto. For example, the information processing apparatus 100 may be configured to transmit information for capturing all the images corresponding to the records included in the table 501 that is the captured image list, to the imaging assist apparatus 150 and/or the imaging apparatus 180 at a time. Alternatively, the information processing apparatus 100 may be configured to transmit information for capturing a plurality of images corresponding to records included in the table 501 that is the captured image list to the imaging assist apparatus 150 and/or the imaging apparatus 180. The imaging assist apparatus 150 and/or the imaging apparatus 180 may be configured to transmit information to be input into the table 501 that is the captured image list to the information processing apparatus 100 at a time when the capturing of all of the images is completed.

Fig. 4A illustrates an imaging region 400 of the surface to be inspected (inspection target surface) of the structure to be inspected. Fig. 4A illustrates that images of respective corresponding portions of the surface to be inspected in the imaging region 400 are captured in order in the direction indicated by an arrow 411, with each of imaging positions 421 represented by the rhombus at the center. Fig. 4B illustrates a combined image 450 including the images captured in order in Fig. 4A. The combined image 450 is used to perform inspections in the imaging region 400 of the surface to be inspected.

In step S202, the CPU 101 obtains the table 501 generated in step S201 and the captured image files. The subsequent processing of steps S203 to S205 is repeated on each of the obtained captured image files in order of captured image identifiers (IDs) listed in the table 501.

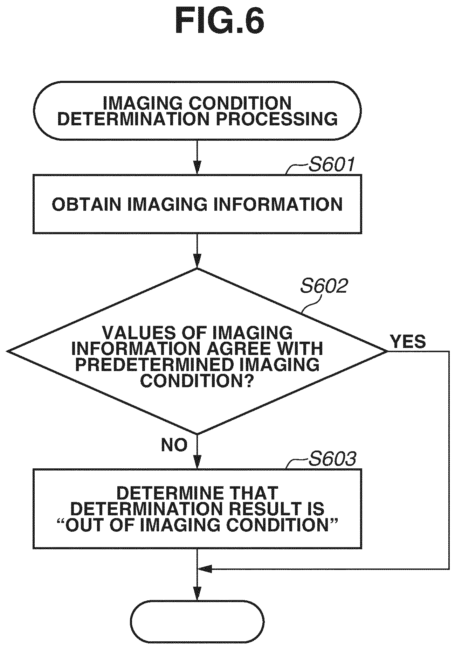

In step S203, the CPU 101 performs imaging condition determination processing for determining the imaging condition with which a captured image is captured. The imaging condition determination processing will be described below with reference to the flowchart of Fig. 6. In the imaging condition determination processing, if the determined imaging condition of the captured image does not agree with a predetermined imaging condition, the CPU 101 records "out of imaging condition", which is information indicating that the predetermined imaging condition is not satisfied, into the determination information field at the corresponding captured image ID in the table 501. The result of the imaging condition determination processing is used in reimaging determination processing to be described below. In other words, according to the present embodiment, whether to recapture the image can be determined based on the imaging condition of the captured image. Images to be recaptured can thus be determined by performing the imaging condition determination processing of step S203 using the imaging condition, without performing image quality determination processing of step S205 to be described below. Since the imaging condition determination processing of step S203 with a lower load than that of the image quality determination processing of step S205 to be described below is performed in a prior stage, the processing time can be reduced.

Examples of the imaging condition determined in step S203 include an aperture value (f-stop number). To use images having a large depth of field and not much affected by out of focus blur due to diffraction for inspection, a condition range is provided for aperture values at which the images for inspection use are captured. In other words, in the present embodiment, an imaging range where an image is captured at an aperture value outside the predetermined range or other than predetermined values is determined not to be used for predetermined image processing for inspection, such as deformation detection and combination processing, and the captured image is determined to be recaptured.

Another example of the imaging condition determined in step S203 may be an International Organization for Standardization (ISO) value (sensitivity) indicating light-capturing capability. An image that is captured at a high ISO value and likely to be much affected by noise is unsuitable for inspection. A condition value is therefore provided for the ISO value at which the images for inspection use are captured. In other words, in the present embodiment, an imaging range where an image is captured at an ISO value outside a predetermined range or other than predetermined values is determined not to be used for predetermined image processing for inspection, such as the deformation detection and the combination processing, and the captured image is determined to be recaptured.

Another example of the imaging condition determined in step S203 may be an object distance. If the distance to an object (object distance) in capturing the image is too large, image resolution can be too low to detect fine deformations. A condition is therefore imposed on the distance to the object at which the image for inspection use is captured. In other words, in the present embodiment, an imaging range in which an image is captured at an object distance outside a predetermined range or other than predetermined values is determined not to be used for predetermined image processing for inspection, such as the deformation detection and the combination processing, and the captured image is determined to be recaptured. In addition, the imaging condition determined in step S203 may include a plurality of conditions set for respective attributes.

In step S204, the CPU 101 determines whether to shift the processing to step S205 for the image to be processed, using the determination result of step S203. If the captured image is determined to agree with the predetermined imaging condition in step S203 (YES in step S204), the processing proceeds to step S205. If not (NO in step S204), the processing proceeds to step S203. In step S203, the CPU 101 processes the captured image with the next captured image ID.

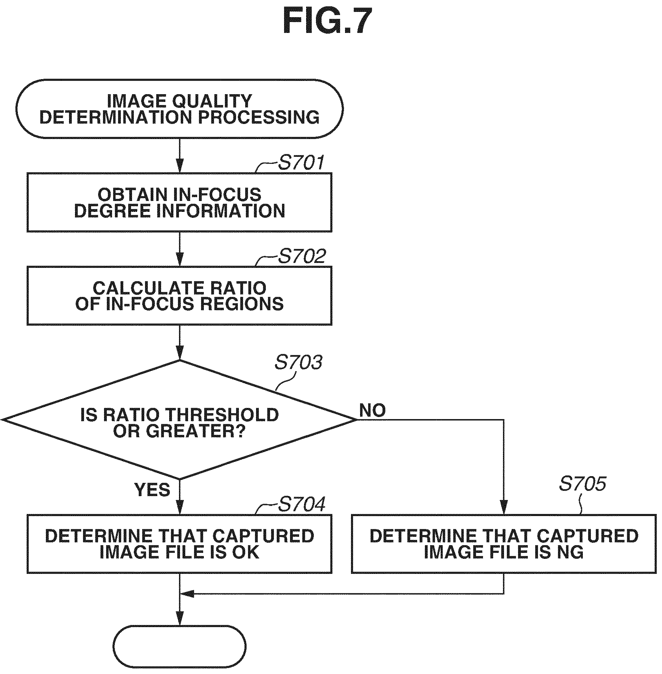

In step S205, the CPU 101 performs image quality determination processing for determining the image quality of the captured image. The image quality determination processing will be described with reference to the flowchart of Fig. 7. The information processing apparatus 100 records the determination result of the image quality determination processing in step S205 into the determination information field of the table 501 illustrated in Fig. 5C. In the image quality determination processing of step S205, the image quality is determined, for example, by using the in-focus degree information indicating the degree of in-focus for each predetermined area of the captured image. One of the reasons why the in-focus degree information is used is that the in-focus position may deviate because the imaging assist apparatus 150 and the imaging apparatus 180 move due to a wind gust occurring during the imaging processing, for example. Another reason is that an obstacle such as a worker and a bird may come to a distance measurement point of the imaging apparatus 180 between the imaging apparatus 180 and the surface to be inspected. This can lower the image quality since the image is captured at a focal length different from that for the original object. Such an image in which the surface to be inspected is not properly in focus is determined not to be used for inspection and to be recaptured, since image processing for inspection, such as deformation detection and combination, may fail to be properly performed. While the image quality determination processing of step S205 is described to determine the image quality by using the in-focus degree information, the image quality may be determined based on resolution expressed by the number of pixels per unit length of the surface to be inspected.

In step S206, the CPU 101 determines whether the imaging condition determination processing of step S203 or the image quality determination processing of step S205 has been completed for all the captured images obtained in step S202. If the determination processing has been completed for all the captured images (YES in step S206), the processing proceeds to step S207. If not (NO in step S206), the processing proceeds to step S203. In step S203, the CPU 101 processes the captured image with the next captured image ID.

In step S207, the CPU 101 determines whether the determination information in the table 501 includes an image quality determination result "NG" or "out of imaging condition". If the determination information includes an image quality determination result "NG" or "out of imaging condition" (YES in step in step S207), the processing proceeds to step S208. If not (NO in step S207), the processing ends.

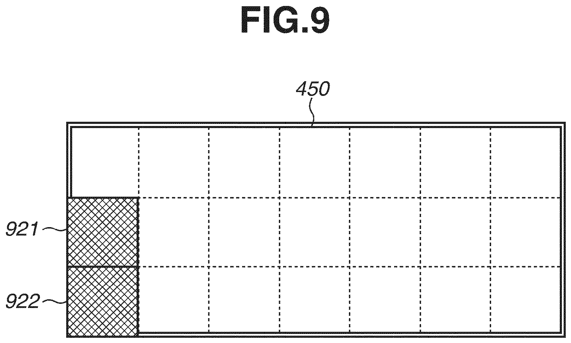

In step S208, the CPU 101 identifies an image or images to be recaptured. In the first embodiment, the information processing apparatus 100 generates a combined image based on the imaging positions and imaging ranges of the respective captured images, and presents the imaging position(s) of the image(s) to be recaptured on the combined image to the operator. The information processing apparatus 100 identifies the image(s) about which the determination information in the table 501 is not OK, and presents the imaging position(s) and imaging range(s) of the image(s) to be recaptured in the combined image based on the information about the imaging position(s). As illustrated in Fig. 9, an image 921 to be recaptured and an image 922 to be recaptured in a combined image 450 are displayed on the display unit 105. While Fig. 9 illustrates an example in which the imaging positions or imaging ranges of the images to be recaptured are presented to the user as highlighted on the combined image 450, other modes may be employed. For example, the information processing apparatus 100 may be configured to output the imaging positions and directions of the images to be recaptured as text information. Alternatively, the information processing apparatus 100 may be configured to output information from which the captured images to be recaptured can be identified. The information processing apparatus 100 may be configured to store the captured images to be recaptured into a predetermined folder (directory), for example. Alternatively, the information processing apparatus 100 may be configured in such a manner that information for identifying the presence of the images not to be used for image processing such as deformation detection and combination is displayed or output by sound. Alternatively, the information processing apparatus 100 may be configured in such a manner that information indicating the presence of the images to be recaptured is displayed or output by sound. Alternatively, the information processing apparatus 100 may be configured to output information indicating the determination results of step S205 in association with the respective images determined. For example, the information processing apparatus 100 may be configured to output information indicating whether the images can be used for image processing such as deformation detection and combination or whether to recapture the images in association with the respective images that are the determination targets. For example, the information processing apparatus 100 may be configured to output information "OK" indicating that the image quality satisfies a condition or information "NG" indicating that the image quality does not satisfy the condition, in association with the respective images that are the determination targets. In this way, the information processing apparatus 100 may be configured to output information indicating whether to use the images for predetermined image processing in various modes.

Next, details of the imaging processing illustrated in step S201 of Fig. 2 will be described with reference to the flowchart illustrated in Fig. 3. In step S301 of Fig. 3, the information processing apparatus 100 accepts the specification of the inspection range (imaging range) of the structure from the user. The information processing apparatus 100 determines the number of images to be captured and the imaging positions of the respective images based on the area of the specified inspection range (imaging range). For example, the information processing apparatus 100 accepts the specification that the imaging region 400 illustrated in Fig. 4A is the inspection range (imaging range) from the user. The information processing apparatus 100 calculates the number of images to be captured and the imaging positions of the respective images based on two diagonal points of the imaging region 400. For example, if the inspection target surface of the structure has 7 m width and 3 m length and a single captured image can cover a range of 1 m width and 1 m length, seven columns by three rows, i.e., 21 captured images are determined to be necessary as illustrated in Fig. 4B.

If the specification of the inspection range (imaging range) from the user is completed, then in step S302, the CPU 101 generates the captured image list illustrated by the table 501 of Fig. 5A based on the number of images to be captured and the imaging positions calculated in step S301. The table 501 includes attributes such as a captured image ID, an imaging position, a captured image filename, and determination information. The attributes included in the table 501 are just examples, and not all the attributes are necessarily indispensable. The table 501 may include other attributes. The captured image ID is an ID for identifying a captured image file. The imaging position indicates the imaging position used by the camera platform apparatus. For example, the top left imaging position is stored as coordinate values "row 1, column 1". For the determination information, the determination result of the image quality determination processing in step S205 is stored. When the table 501 is generated in step S302, the information about the captured image IDs and the imaging positions calculated from the number of images to be captured is stored as illustrated in Fig. 5A. The captured image filename field and the determination information field are empty.

In step S303, the CPU 101 controls the camera platform apparatus that is the imaging assist apparatus 150 and the imaging apparatus 180 to capture images in the order of the captured image IDs in the table 501 generated in step S302 based on the information (imaging position information) about the imaging positions corresponding to the captured image IDs.

The information processing apparatus 100 changes the imaging direction and imaging position of the imaging assist apparatus 150 based on coordinate information described in the imaging position information corresponding to each captured image ID in the table 501. The information processing apparatus 100 then controls the imaging apparatus 180 to adjust focus by an automatic focus function with the central area of the screen as the distance measurement point, for example. The information processing apparatus 100 transmits an imaging instruction to the imaging apparatus 180 so that an image is captured upon the completion of the automatic focusing. The information processing apparatus 100 stores information such as the captured filename into the corresponding record of the captured image list based on control from the imaging assist apparatus 150 or the imaging completion notification transmitted from the imaging apparatus 180. As illustrated in Fig. 5B, the information processing apparatus 100 writes the captured image filename into the captured image filename field of the table 501. The information processing apparatus 100 repeats such processing until all the images corresponding to the captured image list have been captured. If all the images corresponding to the generated captured image list have been captured, the imaging processing ends.

Next, details of the imaging condition determination processing illustrated in step S203 of Fig. 2 will be described with reference to the flowchart illustrated in Fig. 6. In step S601 of Fig. 6, the CPU 101 obtains imaging information included in the captured image to be processed. The imaging information refers to metadata recorded as imaging parameters used in capturing the image. More specifically, the imaging information include an imaging time, an aperture value (f-stop number), and an ISO sensitivity.

In step S602, the CPU 101 determines whether the values of the imaging information obtained in step S601 agree with a predetermined imaging condition. If the values are determined to be out of the imaging condition (NO in step S602), the processing proceeds to step S603. If the values are determined to fall within the imaging condition (YES in step S602), the processing ends. The imaging condition includes thresholds or ranges set in advance. The determination is made based on whether the values included in the imaging information fall within the thresholds or ranges. For example, the aperture value, the ISO sensitivity, and the distance to the object described in the description of the processing of step S203 may be used as the imaging condition.

In step S603, the CPU 101 determines that the determination result is "out of imaging condition", and records the determination result into the determination information flied of the table 501. The information processing apparatus 100 may be configured to, if the values of the obtained imaging information satisfy a predetermined imaging condition, record it into the determination information field of the table 501.

Next, details of the image quality determination processing illustrated in step S205 of Fig. 2 will be described with reference to the flowchart illustrated in Fig. 7. In step S701 of Fig. 7, the CPU 101 obtains the in-focus degree information included in the captured image to be processed. The in-focus degree information is information obtained along with the image captured by the imaging apparatus 180 including the full image plane phase difference image sensor. The in-focus degree information is information in which the defocus amount of each region of the image is recorded.

In step S702, the CPU 101 calculates the ratio of regions by using the in-focus degree information obtained in step S701. The processing for calculating the ratio in step S702 will be described with reference to Figs. 8A and 8B. Figs. 8A and 8B illustrate examples of a defocus map that is the in-focus degree information. Outer frames 801 and 821 are frames corresponding to the image size of the input image. Numerical values 802 and 822 are defocus amounts indicating the degrees of in-focus in the respective regions. Lines 803 and 823 indicate the borderlines between regions with different defocus amounts. As employed herein, a defocus value (defocus amount) is an absolute numerical representation of the amount of focus deviation in a front-to-back direction (depth direction) from a target object with respect to each pixel of the image. The defocus amount of a forward focus deviation in the depth direction and the defocus amount of a backward focus deviation in the depth direction may be given different signs. More specifically, the information processing apparatus 100 may be configured to give a positive value to the defocus amount of a forward focus deviation, and a negative value to the defocus amount of a backward focus deviation.

The full image plane phase difference image sensor of the imaging apparatus 180 can obtain information about the defocus amount at each pixel position during imaging. Conventional techniques can be used as a method for obtaining the information about the defocus value. For example, automatic focusing techniques using the amount of focus deviation in the front-to-back direction detected from an image sensor have already been widely put to practical use. The information processing apparatus 100 may be configured to obtain the defocus value by using parallax images captured by a stereoscopic camera.

In the defocus maps of Figs. 8A and 8B, the regions with a defocus value "0" are regions in focus (in-focus regions) in unit of focusing by the imaging apparatus 180. The regions with a defocus value greater than the defocus amount of "0" indicate that the amount of focus deviation from the distance at which the optical system is in focus increases (in-focus degree deteriorates) as the defocus value increases. In the example of Fig. 8A, the defocus amount is expressed in two levels "0" and "1". In the example of Fig. 8B, the defocus amount is expressed in three levels "0", "1", and "2". The number of levels is not limited thereto, and other values may be used.

The calculation of the ratio of in-focus regions will be described with reference to Fig. 8A. The ratio is calculated with the number of pixels surrounded by the outer frame 801 as the denominator and the number of pixels having a defocus value "0" as the numerator. In this way, the ratio of the in-focus regions in the image is calculated. In the example of Fig. 8A, the ratio of regions with the defocus amount "0" is approximately 90%. In Fig. 8B, the ratio of regions with the defocus amount "0" is approximately 60%.

In step S703, the CPU 101 determines whether the ratio calculated in step S702 is greater than or equal to a predetermined threshold. If the ratio is greater than or equal to the predetermined threshold (YES in step S703), the processing proceeds to step S704. If the ratio is less than the threshold (NO in step S703), the processing proceeds to step S705. Suppose that the threshold for the ratio is 80%. In such a case, the ratio in Fig. 8A is greater than or equal to the threshold (80%). The ratio in Fig. 8B is less than the threshold (80%). While the threshold is described to be 80%, the threshold may be freely set based on the user's input. The threshold may be determined based on a relationship between the ratio of in-focus regions and the detection accuracy of the deformation detection. Various methods may be employed in determining the threshold. For example, a ratio at which the average accuracy of the deformation detection reaches or exceeds 95% may be set as the threshold in advance.

In step S702, the ratio of regions where the defocus amount is "0" is described to be determined. However, it is not limited thereto. For example, the information processing apparatus 100 may be configured to determine the ratio of regions where the defocus amount is "0" or "1". In other words, the information processing apparatus 100 may be configured to determine the ratio of regions where the in-focus degree is greater than or equal to a threshold. Alternatively, the information processing apparatus 100 may be configured to determine the ratio of regions where the defocus amount is "3" in step S702. In such a case, if, in step S703, the ratio is less than a threshold, the processing may proceed to step S704. If the ratio is greater than or equal to the threshold, the processing may proceed to step S705. Alternatively, the information processing apparatus 100 may be configured to determine a first ratio of regions where the defocus amount is "0" and a second ratio of regions where the defocus amount is "3" in step S702. In such a case, if the first ratio is greater than a first threshold and the second ratio is less than a second threshold different from the first threshold, the processing may proceed to step S704. In other cases, the processing may proceed to step S705. In this way, whether the in-focus degree of the image satisfies various predetermined conditions can be determined based on the in-focus degree information. Based on the determination result of the in-focus state, whether to use the image for image processing such as deformation detection and combination can be determined. Alternatively, the information processing apparatus 100 may be configured to determine whether the in-focus degree of the image satisfies various predetermined conditions based on the in-focus degree information, and use the determination result of the in-focus state in determining whether to recapture the image.

In step S704, the CPU 101 determines that the captured image file that is a processing target can be used for image processing such as deformation detection and combination, or does not need to be recaptured (OK). The CPU 101 records the determination result into the determination information field of the table 501. Then, the image quality determination processing ends.

In step S705, the CPU 101 determines that the captured image file that is a processing target is unusable for image processing such as deformation detection and combination, or to be recaptured (NG). The CPU 101 records the determination result into the determination information field of the table 501. Then, the image quality determination processing ends.

The image quality determination processing of step S205 is described to use the in-focus degree information, i.e., the degree of in-focus state. However, the image quality can be determined using other image processing results. For example, frequency analysis processing can be used to calculate a degree of out of focus blur from the amounts of high and low frequency components, and the image quality may be determined based on a predetermined threshold for out of focus blur intensity. More specifically, out of focus blur information indicating the degree of out of focus blur in each predetermined region of the image is generated by using the frequency analysis processing on the image, and the ratio of regions where the degree of out of focus blur satisfies a predetermined condition in the image is determined based on the generated out of focus blur information. The information processing apparatus 100 may be configured to output determination information indicating whether to use the image for predetermined image processing based on the determination result whether the degree of out of focus blur satisfies a predetermined condition.

Further, the information indicating the degree of out of focus blur and the in-focus degree information may be used in combination. More specifically, the information processing apparatus 100 may be configured to determine whether to recapture an image in the imaging range of a captured image by using the image quality determination result obtained by using the in-focus degree information and the image quality determination result obtained by using the degree of out of focus blur based on the frequency analysis processing.

While the imaging processing of step S201 is described to be controlled and performed by the information processing apparatus 100, it is not limited thereto. More specifically, the information processing apparatus 100 may be configured to omit the processing of step S201 and obtain information to be used in subsequent processing, such as the captured image list, while obtaining captured images in step S202.

As described above, in the present embodiment, the information processing apparatus 100 determines the image quality of a plurality of captured images of a structure in advance in using the captured images for inspection of the structure, such as combination and deformation detection. The information processing apparatus 100 can thereby identify images having poor image quality and present the identified images to the operator as candidates to be recaptured. Since the information processing apparatus 100 identifies the locations (positions) of the captured images to be recaptured in the combined image, the operator can recapture images at the identified imaging positions, which reduces labor in recapturing the images. In this way, the combined image can be prevented from including low quality images, and the detection processing for the deformation such as crack can be performed with higher reliability. Moreover, the reimaging can be performed in a short time since only unsuitable images are recaptured instead of all the images.

The information processing apparatus 100 may be configured to generate visualization information for visualizing the defocus values such as illustrated in Figs. 8A and 8B for the captured image file of which the image quality is determined in step S205. For example, an image obtained by superimposing information associated with the magnitudes of the defocus amount on the captured image may be generated as the visualization information for visualizing the defocus values. The information processing apparatus 100 may be configured to output the generated superimposed image in association with the image quality determination result. For the information to be superimposed, color of higher density or higher saturation may be selected as the defocus amount increases. For example, the information processing apparatus 100 may be configured to superimpose no information on pixels with a defocus amount of "0", green on pixels with a defocus amount of "1", yellow on pixels with a defocus amount of "2", and red on pixels with a defocus amount of "3". The operator can find out the reason why the image quality determination is no good (NG) by observing the superimposed image generated in this way where the degrees of in-focus state are visualized by the superimposed information, and can make feedback time of at the time of reimaging. For example, if the operator observes the superimposed image and an obstacle, such as a human and a bird, is found between the surface to be imaged (surface to be inspected) and the imaging apparatus 180 or if the in-focus distance or direction of the imaging apparatus 180 is found to be changed due to a wind gust during imaging, the image only needs to be recaptured under the same condition. However, in other cases such as where the image is out of focus because the surface to be inspected is uneven, the operator recaptures the image after changing the aperture value included in the imaging settings of the imaging apparatus 180 so that the uneven regions also fall within the depth of field. The generation of the image visualizing the degrees of in-focus state can thus facilitate determining the reason why the image is out of focus, and enables appropriate reimaging.

In the present embodiment, the imaging assist apparatus 150 is described to be a camera platform apparatus. However, the imaging apparatus 180 may be mounted on an autonomous flying drone (unmanned aircraft), in which case images can be captured at different imaging positions. In the case of using a drone apparatus, a Global Navigation Satellite System (GNSS) device, an altimeter, and/or an electronic compass mounted on the drone apparatus is/are used to measure the imaging positions and directions specified by the operator and capture images at the specified positions. In capturing images at a place where the GNSS device is not usable, like under the floor slab of a bridge, the imaging apparatus 180 communicates with a base station installed on the ground and relatively measures the direction to and distance from the drone apparatus to measure the imaging position. Since the techniques related to the measurement of the imaging position are not the main objective of the present invention, a description thereof will be omitted here.

The information processing system according to the present embodiment is described to include the information processing apparatus 100, the imaging assist apparatus 150, and the imaging apparatus 180 that are configured as separate independent apparatuses. However, the information processing system may be configured as a single apparatus having the functions of the apparatuses described above. For example, the information processing system may be configured as an integral drone apparatus having the imaging function. Alternatively, the information processing system may be configured to perform distributed processing by a greater number of apparatuses.

### <First Modification>

In the first embodiment, a configuration is described where images identified to be recaptured are displayed on the combined image as illustrated in Fig. 9, and the operator can recapture the images based on the display information. A first modification of the first embodiment describes an example of processing where the images to be recaptured are presented to the user by moving the captured images into a different directory based on the results of the image quality determination, instead of displaying the positions of the images to be recaptured on-screen.

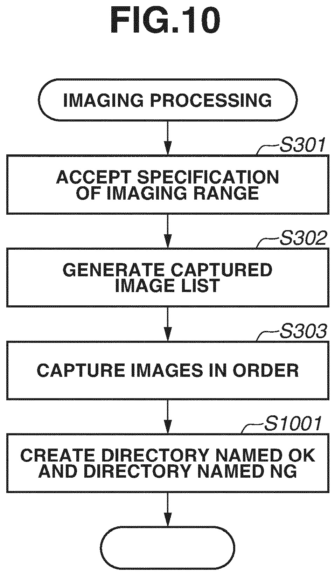

Fig. 10 is a flowchart illustrating a procedure for imaging processing according to the first modification of the first embodiment. The flowchart of Fig. 10 is a flowchart with the flowchart of Fig. 3 modified, which is details of step S201 in the main flowchart illustrated in Fig. 2 according to the first embodiment. Processes denoted by the same step numbers are similar to those of Fig. 3. A description thereof will thus be omitted.

In Fig. 10, the information processing apparatus 100 initially performs the above-described processing of steps S301 to S303 as imaging processing. In step S1001, the CPU 101 then creates a directory named OK and a directory named NG in a directory where the captured image files are to be stored.

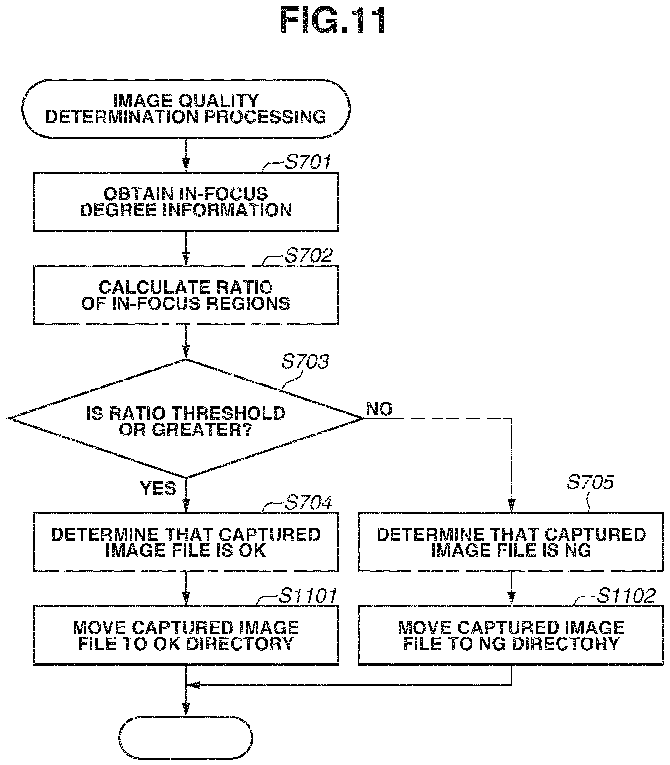

Next, image quality determination processing according to the first modification will be described. Fig. 11 is a flowchart illustrating a procedure for the image quality determination processing according to the first modification of the first embodiment. Processes similar to those illustrated in the flowchart of Fig. 7 described above are denoted by the same step numbers. Details thereof will be omitted.

In Fig. 11, the processing of steps S701 to S705 is similar to that described above. A difference from the flowchart of Fig. 7 is that step S1101 is added after the processing of step S704, and step S1102 is added after the processing of step S705.

In step S1101 executed after the processing of step S704, the CPU 101 moves the captured image file determined to be OK in step S704 to the OK directory created in step S1001.

In step S1102 executed after the processing of step S705, the CPU 101 moves the captured image file determined to be NG in step S705 to the NG directory created in step S1001.

The flowchart of the image quality determination processing (step S205) according to the first modification of the first embodiment has been described above. According to the first modification, captured image files to be recaptured can be found out based on the presence or absence of a captured image file in the NG directory. Captured image files determined not to satisfy the imaging condition in the imaging condition determination processing of step S203 are not moved into either of the directories. Such captured image files can be determined to be recaptured. The information processing apparatus 100 may be configured to also move the captured image files determined not to satisfy the imaging condition into the NG directory as captured image files to be recaptured. The information processing apparatus 100 may be configured to also create an imaging condition NG directory in step S1001, and move the captured image files determined not to satisfy the imaging condition into the imaging condition NG directory.

If all the captured image files are moved to the OK directory by the directory classification, an inspection operation using the combined image can be immediately started since all the captured images have favorable image quality.

The configuration for classifying the captured images into the directories according to the first modification of the first embodiment enables collective check of the images with respect to each determination result of the image quality determination. The operator can immediately check for image quality defects by checking the images determined to be recaptured or by visually observing the superimposed image files visualizing the in-focus degree information described in the first embodiment.

Since moving and classifying the captured image files into the directories sorts out captured image files determined to be NG, and the OK directory includes only captured image files determined to be OK, the operator does not need to perform image classification operations. If the images are recaptured, the subsequent generation of the combined image and inspections using the combined image can be immediately performed by adding recaptured image files determined to be OK since all the captured image flies to be combined are in the OK directory.

As described above, according to the first modification, the information processing apparatus 100 outputs information for storing files expressing images into predetermined directories based on the result of the image quality determination processing. Whether to recapture images can be indicated by the storage locations of the files expressing the images.

### <Second Modification>

In the first embodiment, the list of images to be recaptured is managed on the RAM 103 or the HDD 104. A second modification of the first embodiment describes an example of processing of outputting the captured image list in the table 501, in a file form instead of by memory transfer.

In the second modification, the processing for generating the table 501, which is the captured image list, in step S302 of Fig. 3 illustrating the imaging processing of step S201 in the main flowchart of Fig. 2 according to the first embodiment is modified. The information processing apparatus 100 is configured to, in generating the table 501, generate a list file in a comma-separated values (CSV) format where items are separated by commas, and store the list file in the directory where the group of captured images to be input is stored. The generated list file includes a captured image (filename) field and a determination information field that are empty. The fields are written when the captured image files are generated in step S303, and also written when the result of the imaging condition determination in step S203 is obtained and when the result of the image quality determination in step S205 is obtained.

With such a configuration, the list of captured image files to be recaptured is handled as a list file, whereby the determination results of the captured image files can be listed. The list file can also be used by other apparatuses, systems, and applications.

### <Third Modification>

In the first embodiment, the first modification of the first embodiment, and the second modification of the first embodiment, images are recaptured by the operator checking (visually observing) the determination results whether the images are to be recaptured. A third modification of the first embodiment describes an example in which the imaging assist apparatus 150 is controlled to recapture images by using the determination results and the information about the imaging positions of images to be recaptured.

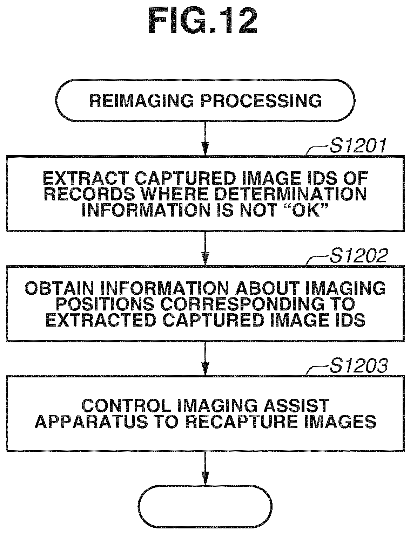

Fig. 12 is a flowchart illustrating a procedure for reimaging processing. The reimaging processing of Fig. 12 is processing in which the processing for identifying images to be recaptured in step S208 of Fig. 2 is modified. The information processing apparatus 100 may be configured to perform the reimaging processing after step S208 of Fig. 2.

In step S1201, the CPU 101 extracts the captured image IDs of records in which the determination information is not "OK", i.e., is "NG" indicating that an image is to be recaptured from the table 501.

In step S1202, the CPU 101 obtains information about the imaging positions corresponding to the captured image IDs extracted in step S 1201.

In step S1203, like step S303 of Fig. 3, the CPU 101 controls the imaging assist apparatus 150 to capture images by using the information about the imaging positions obtained in step S1202. These are the descriptions of the flowchart of the reimaging processing with reference to Fig. 12.

In the third modification of the first embodiment, the imaging positions are identified from the captured image IDs of the images to be recaptured, and the imaging assist apparatus 150 that is a camera platform apparatus is controlled to recapture the images by using the information about the identified imaging positions. In this way, the images can be recaptured without the operator making operations for reimaging.

The captured image files recaptured in the reimaging processing of Fig. 12 may be input as a group of captured images to be input in step S202 of Fig. 2, and whether to recapture the recaptured image files again may be determined by performing the flowchart of Fig. 2 in order.

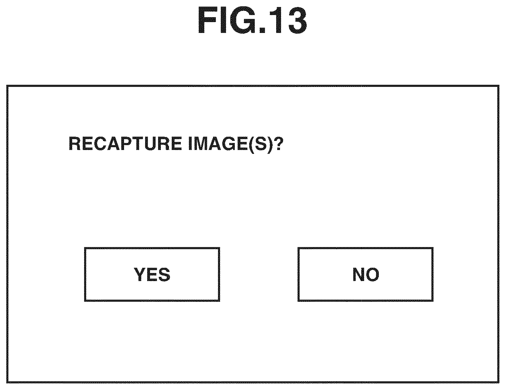

The information processing apparatus 100 may be configured to display a screen for checking whether to recapture images as illustrated in Fig. 13 in step S1203 and perform the reimaging processing based on the operator's selection instruction, instead of immediately recapturing the images in step S208. This not only enables automatic reimaging but also enables checking the captured image files causing the reimaging. In this way, by checking the causes why the captured images are determined to be NG by the image quality determination, the NG determinations can be prevented from being repeated at the time of the reimaging.

### <Fourth Modification>

In the first embodiment and the first, second, and third modifications of the first embodiment, the determination in the image quality determination processing is described to be made by using the in-focus degree information. As described above, the image quality determination processing may be performed by using the degree of out of focus blur based on the frequency analysis processing instead of the in-focus degree information. The image quality determination result using the in-focus degree information and the image quality determination result using the degree of out of focus blur based on the frequency analysis processing may be combined. A fourth modification describes a case where a determination using imaging resolution information indicating imaging resolution and a determination using frequency analysis information indicating a frequency analysis result are made in addition to the determination using the in-focus degree information.

The imaging resolution refers to the size of the surface to be imaged per pixel of a captured image, expressed in units of mm/pixel. The imaging resolution can be calculated from the size of the image sensor, the image size of the surface to be imaged, and the distance to the surface to be imaged. The greater the value of the imaging resolution, the rougher the resolution, and the deformations such as a crack are more difficult to be observed.

The frequency analysis information is obtained by performing the frequency analysis processing on the image and calculating an average value of the obtained frequency components. If the calculated average value is small, there are less high frequency components or edgy portions and more out of focus blur and motion blur (the degrees of out of focus blur and motion blur are high). In addition to the out of focus blur determination by the in-focus degree determination, motion blur can be determined by the frequency analysis. Images in which deformations such as a crack are difficult to observe because of the effect of motion blur can thereby be excluded.

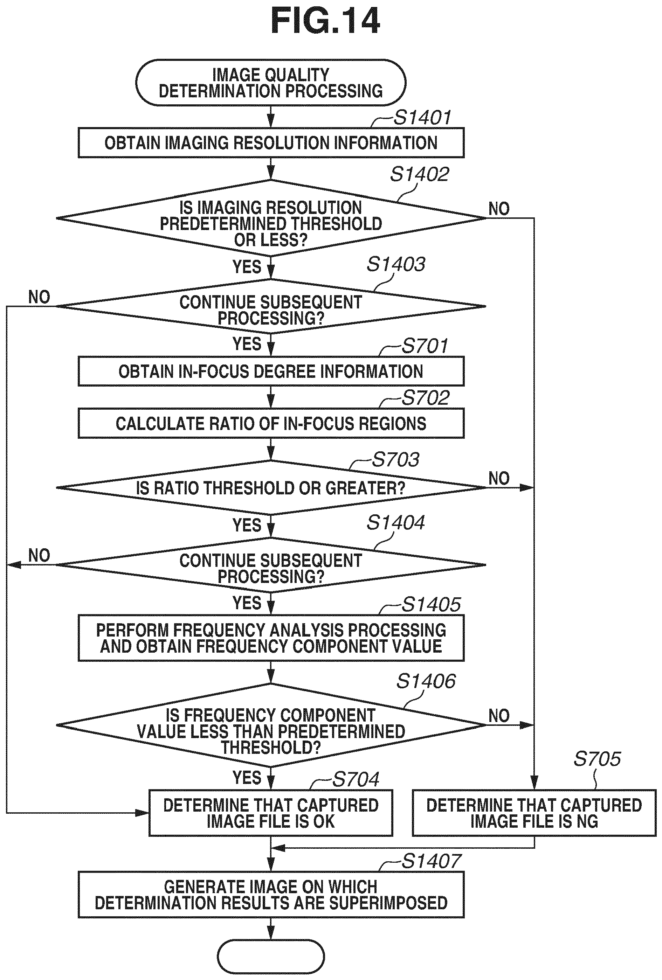

Fig. 14 is a flowchart illustrating a procedure of image quality determination processing. The image quality determination processing of Fig. 14 is processing in which the image quality determination processing of Fig. 7 is modified.

In step S1401, the CPU 101 obtains imaging resolution information included in the captured image. More specifically, the CPU 101 calculates the imaging resolution from the image size of the captured image, the size of the image sensor, and the distance to the surface to be imaged. The distance to the surface to be imaged is obtained by obtaining the distance to the object in focusing on the position of the distance measurement point on the object.

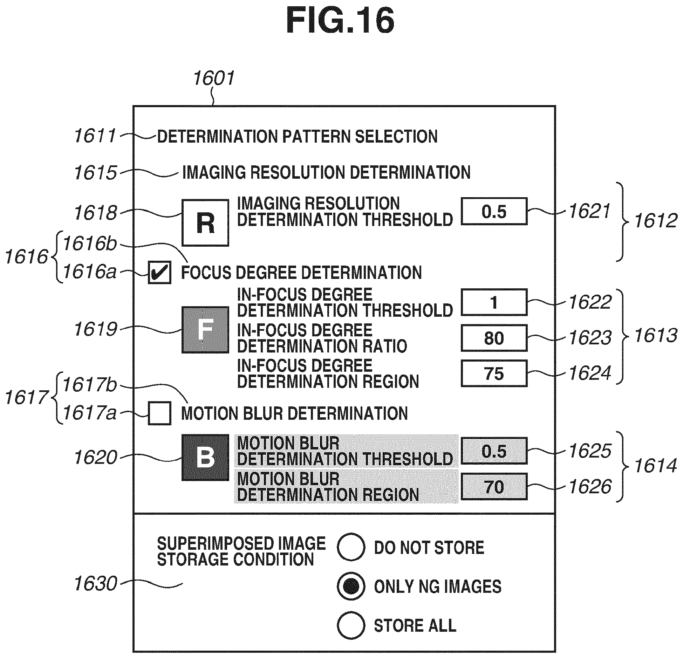

In step S1402, the CPU 101 determines whether the imaging resolution obtained in step S 1401 is less than or equal to a predetermined threshold. If the imaging resolution is less than or equal to the threshold (YES in step S1402), the processing proceeds to step S1403. If the imaging resolution is greater than the threshold (NO in step S1402), the processing proceeds to step S705. In this way, whether the captured image has imaging resolution desirable as the quality of an inspection image can be determined. If the imaging resolution is greater than the threshold, i.e., the captured image of the object is rough, the captured image file is determined to be NG without proceeding to the subsequent determination processing. The setting of the threshold for the imaging resolution determination will be described below with reference to a setting screen 1601 illustrated in Fig. 16.

The processing of steps S701, S702, and S703 is similar to that described with reference to Fig. 7. A description thereof will thus be omitted.

In step S1403, the CPU 101 determines whether to continue the processing subsequent to the imaging resolution determination. If the subsequent processing is to be continued (YES in step S 1403), the processing proceeds to step S701. If the subsequent processing is to be ended (NO in step S1403), the processing proceeds to step S704. The setting of whether to continue the processing subsequent to the imaging resolution determination will be described below with reference to the setting screen 1601 illustrated in Fig. 16.

In step S1404, the CPU 101 determines whether to continue the processing subsequent to the in-focus degree determination processing. If the subsequent processing is to be continued (YES in step S1404), the processing proceeds to step S1405. If the subsequent processing is to be ended (NO in step S1404), the processing proceeds to step S704. As with step S1403, the setting of whether to continue the subsequent processing will be described below with reference to the setting screen 1601 illustrated in Fig. 16.

In step S1405, the CPU 101 performs the frequency analysis processing on the captured image to obtain a frequency component value. The CPU 101 calculates frequency components in a horizontal direction and frequency components in a vertical direction by using wavelet transformation as an example of the frequency analysis processing. The CPU 101 calculates an average of the obtained frequency components. The calculated average value is the frequency component value.

In step S1406, the CPU 101 determines whether the frequency component value calculated in step S 1403 is less than a predetermined threshold. If the frequency component value is less than the threshold (YES in step S1406), the processing proceeds to step S704. If the frequency component value is greater than or equal to the threshold (NO in step S1406), the processing proceeds to step S705. Thus, if the frequency component value is greater than or equal to the threshold, the captured image is determined to include a lot of high frequency components and a lot of edgy regions. If the frequency component value is less than the threshold, the captured image is determined to include a lot of low frequency components and to have been much affected by out of focus blur and motion blur. Since the motion blur determination processing is performed after the in-focus degree determination, whether the captured image is suitable as an inspection image can be determined even in an imaging situation where the captured image is determined to be in focus and is motion-blurred. An example of the imaging situation where the captured image is in focus and is motion-blurred is a situation in which the image is captured by the imaging apparatus 180 mounted on a flying object such as a drone. The drone can be swung due to wind during the imaging. The threshold for the motion blur determination will be described below with reference to the setting screen 1601 of Fig. 16.

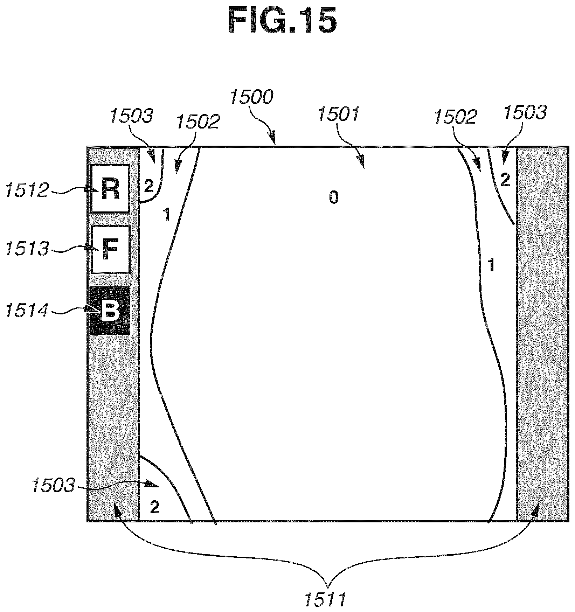

In step S1407, the CPU 101 generates an image on which determination results are superimposed (determination result superimposed image) by using the information about the result of the determination made in step S704 or S705. The generated image will be described with reference to Fig. 15.

A result image 1500 includes defocus regions 1501, 1502, and 1503, and a frame region 1511. The frame region 1511 includes an imaging resolution determination result region 1512, an in-focus degree determination result region 1513, and a motion blur determination result region 1514. The defocus regions 1501, 1502, and 1503 are regions into which the defocus map illustrated in Fig. 8B is divided based on respective defocus amounts. The defocus region 1501 is a region where the defocus amount is 0. The defocus region 1502 includes regions where the defocus amount is 1. The defocus region 1503 includes regions where the defocus amount is 2. Regions having the same defocus amount are handled as the same defocus region. Layers colored for the respective defocus regions 1501, 1502, and 1503 are generated, and the colored layers are superimposed on the captured image. The layers are colored by using warning colors, for example. If the defocus amount is less than a predetermined value, color indicating high safety, such as blue and green, may be used. If the defocus amount is greater than the predetermined value, color indicating high alertness, such as yellow and red, may be used. This facilitates visual observation of regions where the defocus amount is large and reimaging is desirable.

The frame region 1511 displays the imaging resolution determination result region (imaging resolution determination icon) 1512, the in-focus degree determination result region (in-focus degree determination icon) 1513, and the motion blur determination result region (motion blur determination icon) 1514 as symbols for indicating the respective determination results. The result image 1500 illustrates an example in which the imaging resolution determination and the in-focus degree determination are OK and the motion blur determination is NG. The icons are differently expressed depending on the determination results. For example, the imaging resolution determination result region 1512 and the in-focus degree determination result region 1513 where the determinations are OK are expressed by white icons with black letters. The motion blur determination result region 1514 where the determination is NG is expressed by a black icon with a white letter. This not only enables the visual observation of the determination results but also facilitates checking the stage where the error has occurred. Moreover, which of the determination methods has not been performed may be indicated by the presence or absence of the icons. For example, a case where, in step S 1402 of the image quality determination flowchart of Fig. 14, the CPU 101 determines that the imaging resolution obtained in step S1401 is less than or equal to the predetermined threshold, is described. In such a case, the frame region 1511 of the result image 1500 may display only the imaging resolution determination result region 1512 without displaying the in-focus degree determination result region 1513 or the motion blur determination result region 1514.

In the frame region 1511, the color of each icon may be changed based on the determination results. Suppose, for example, that the imaging resolution determination icon is assigned red, the in-focus degree determination icon is assigned blue, and the motion blur determination icon is assigned yellow. If the in-focus degree determination on an image is NG, the result image 1500 is generated with the frame region 1511 filled with blue. In this way, even in small image sizes like thumbnail images, the determination results that are difficult to figure out from the icons of the determination regions can thus be identified from the color of the frame region 1511.

The flowchart of the image quality determination processing illustrated in Fig. 14 has been described

Fig. 16 is a diagram illustrating the setting screen 1601 that is an example of the UI screen for setting parameters according to the present modification. The setting screen 1601 includes a determination pattern selection section 1611 and a superimposed image storage condition selection section 1630.

The determination pattern selection section 1611 is divided into three determination sections, i.e., an imaging resolution determination section 1612, an in-focus degree determination section 1613, and a motion blur determination section 1614. The determination sections 1612, 1613, and 1614 include determination name labels 1615, 1616, and 1617, and determination symbols 1618, 1619, and 1620, respectively. Input areas 1621 to 1626 for numerical values such as determination thresholds used in the image quality determination flowchart of Fig. 14 are arranged in the determination sections 1612 to 1614 corresponding to the determination processes using the respective numerical values. More specifically, the imaging resolution determination section 1612 includes an imaging resolution determination name label 1615, an imaging resolution determination symbol 1618, and an imaging resolution determination threshold input area 1621. The in-focus degree determination section 1613 includes an in-focus degree determination name label 1616, an in-focus degree determination symbol 1619, an in-focus degree determination threshold input area 1622, an in-focus degree determination ratio input area 1623, and an in-focus degree determination region input area 1624. The motion blur determination section 1614 includes a motion blur determination name label 1617, a motion blur determination symbol 1620, a motion blur determination threshold input area 1625, and a motion blur determination region input area 1626. The user can intuitively figure out which numerical value relates to which determination process from the layout of such items.

Furthermore, the icons 1512, 1513, and 1514 in Fig. 15 have the same shapes as those of the determination symbols 1618, 1619, and 1620, respectively. This enables the user to intuitively figure out the relationship between the determination settings made on the setting screen 1601 and the results of the determinations on a result superimposed image. It will be understood that the icons 1512, 1513, and 1514 and the determination symbols 1618, 1619, and 1620 may be separately designed. The setting screen 1601 is a screen displayed on a personal computer (PC), a smartphone, or a tablet terminal. The user can make ON/OFF operations on checkboxes and radio buttons to be described below and input numerical values by mouse operations, touch operations, and/or keyboard operations (using the operation unit 106).

Of the determination name labels 1615 to 1617, the in-focus degree determination name label 1616 includes an in-focus degree determination checkbox 1616a and an in-focus degree determination name section 1616b. The motion blur determination name label 1617 includes a motion blur determination checkbox 1617a and a motion blur determination name section 1617b. By making ON/OFF operations on the checkboxes 1616a and 1617a, whether to further perform the corresponding determination processes if the result of the imaging resolution determination process that is always performed is OK can be specified. For example, in Fig. 16, the in-focus degree determination checkbox 1616a is ON and the motion blur determination checkbox 1617a is OFF. This indicates that the in-focus degree determination process is subsequently performed and the motion blur determination process is not performed if the result of the imaging resolution determination process is OK.

In Fig. 16, since the in-focus degree determination checkbox 1616a is ON, the input areas 1622 to 1624 are in a numerical value acceptable state. Since the blur determination checkbox 1617a is OFF, the input areas 1625 and 1626 are grayed out to indicate that numerical values are unable to be input. The user can thus concentrate only on inputting numerical values related to the determination process(es) to be performed.

Based on the states of the in-focus degree determination checkbox 1616a and the motion blur determination checkbox 1617a, the CPU 101 determines whether to continue the processing in steps S1403 and S1404. If the determination in the previous stage is OK and the subsequent processing is not needed, the subsequent processing can thus be omitted. For example, in an imaging mode using a drone that is likely to cause motion blur, the motion blur checkbox 1617a can be turned ON to perform the motion blur determination process. In an imaging mode using a tripod that is unlikely to cause motion blur, the motion blur determination checkbox 1617a can be turned OFF not to perform the motion blur determination process. In the case of performing only the imaging resolution determination process, the imaging resolution can be identified to check whether the captured image is suitable for an inspection image, by turning OFF the in-focus degree determination checkbox 1616a and the motion blur determination checkbox 1617a. In performing the determination processing on a large number of images, an effect of reducing the processing time as described above can be expected since the processing can be stopped based on the intended uses and purposes.

The value input to the imaging resolution determination threshold input area (first setting unit) 1621 indicates the threshold in step S1402. The value input to the in-focus degree determination threshold input area 1622 indicates the predetermined value in step S702. The value input to the in-focus degree determination ratio input area (second setting unit) 1623 indicates the threshold for the ratio in step S703. The value input to the in-focus degree determination region input area (second setting unit) 1624 is an item for setting a region where the ratio is calculated in step S702, and expresses the area of the central region intended for the determination in percentage, with the area of the entire image subjected to the determination processing as 100%. Reducing the central region intended for the determination (reducing the area) reduces the amount of the calculation processing, from which an improvement in speed can be expected. If the value input to the in-focus degree determination region input area (second setting unit) 1624 is set so that the region intended for the determination is less than 100% (e.g., 50%), and the combined image is generated by stitching, only the central region of the image used for the combined image is subjected to the determination. Since only the central region is subjected to the determination, the peripheral portions of the image serving as overlapping margins are excluded from the determination. In this way, images with peripheral portions that are out of focus can therefore be determined to be usable for stitching.

The value input to the motion blur determination threshold input area (third setting unit) 1625 indicates the threshold in step S1406. The value input to the motion blur determination region input area (third setting unit) 1626 is an item for setting a region where the frequency component value is calculated in step S1405. The motion blur determination region 1617 indicates the area of the central region intended for the calculation in percentage, with the area of the entire image subjected to the calculation processing as 100%. In addition to similar effects to that of the in-focus degree determination region 1615, the motion blur determination region 1617 can provide an effect of reducing high frequency components occurring in the motion blur determination because the captured image also includes plants or other objects behind the structure if the structure to be inspected is a bridge pier or the like.

In the present modification, the image quality determination processing of step S205 is replaced by the processing of the flowchart illustrated in Fig. 14, whereby the imaging resolution determination process is performed before the in-focus degree determination process and the motion blur determination process is performed after the in-focus degree determination process. The imaging resolution determination process can determine whether the captured image is suitable as an inspection image. This can reduce the processing time, and a large number of images can be determined in a short time. The motion blur determination process can determine the effect of motion blur in the case of imaging using a drone, where the captured image is determined to be in focus but is motion-blurred. The processing time can be reduced if the determination results of the determination processes are NG, or depending on the imaging environment by selecting the presence or absence of execution of the determination processes.

In the present modification, the imaging resolution determination process, the in-focus degree determination process, and the motion blur determination process are described to be performed in this order as illustrated in Fig. 14, but the determination processes may be performed in any order. However, performing the determination processes in the order illustrated in Fig. 14 can provide the following effects. Performing the imaging resolution determination process first can determine whether to continue or end the processing based on whether the imaging resolution of the image is suitable for inspection. Performing the motion blur determination process last enables determination of an image that is in focus but motion-blurred. Since the frequency analysis processing consuming much processing time is included in the final stage, the number of times of execution of the frequency analysis processing can be reduced depending on the determination results of the previous stages. The entire processing time can thus be reduced.

In the screen of Fig. 16, the order of arrangement of the imaging resolution determination section 1612, the in-focus degree determination section 1613, and the motion blur determination section 1614 enables the user to intuitively figure out that the three determination processes are performed in the order of arrangement on the setting screen 1601.

The imaging resolution determination section 1612 does not include a checkbox like the in-focus degree determination checkbox 1616a or the motion blur determination checkbox 1617a. The reason is that the subsequent determination processes do not need to be performed if the captured image does not have imaging resolution desirable as the image quality of an inspection image, i.e., the object is roughly imaged.

If both the in-focus degree determination checkbox (first selection unit) 1616a and the motion blur determination checkbox (second selection unit) 1617a are OFF and the motion blur determination checkbox 1617a is then turned ON, the in-focus degree determination checkbox 1616a may also turn ON in an interlocked manner. If both the in-focus degree determination checkbox (first selection unit) 1616a and the motion blur determination checkbox (second selection unit) 1617a are ON and the in-focus degree determination checkbox 1616a is then turned OFF, the motion blur determination checkbox 1617a may also turn OFF in an interlocked manner.

This can ensure that the motion blur determination is made after the captured image is determined to be in focus. The reason for such settings is that by performing the motion blur determination process after the in-focus degree determination process as described above, whether the captured image is suitable for an inspection image can be determined even in an imaging situation where the captured image is determined to be in focus and is motion-blurred.

In the foregoing example, the determination result superimposed image (superimposed image, result superimposed image) is generated regardless of whether the determination result is OK or NG. However, superimposed images may be generated only for objects determined to be NG. The processing time may be reduced by generating a list of determination results without generating superimposed images. The superimposed image storage condition selection section 1630 of Fig. 16 is an example of making such selections using radio buttons. In Fig. 16, "only NG images" is selected. "Do not store" or "store all" can also be selected based on user operations.

If "do not store" is selected in the superimposed image storage condition selection section 1630, the determination processing illustrated in Fig. 14 is performed, and images determined to be OK are stored into a predetermined folder and images determined to be NG are stored into another folder. No image on which an image quality determination result is superimposed as illustrated in Fig. 15 is generated. If "only NG images" is selected, the determination processing illustrated in Fig. 14 is performed, and images determined to be OK are stored into the predetermined folder and images determined to be NG are stored into another folder. In addition, images on which an image quality determination result is superimposed as illustrated in Fig. 15 are also stored into the folder where the images determined to be NG are stored. If "store all" is selected, the determination processing illustrated in Fig. 14 is performed, and images determined to be OK are stored into the predetermined folder and images determined to be NG are stored into another folder. In addition, images on which an image quality determination result is superimposed as illustrated in Fig. 15 are also stored into the folder where the images determined to be OK are stored, and images where an image quality determination result is superimposed as illustrated in Fig. 15 are also stored into the folder where the images determined to be NG are stored. By employing such settings, the processing time can be reduced while generating only images demanded by the user.

In generating the determination result superimposed image in step S1407, the superimposition of the icons indicating the determination results on the result image shows in which process the image is determined to be NG. Since no icon is displayed for an unexecuted determination process or processes, the user can find out how far the processes have been performed.

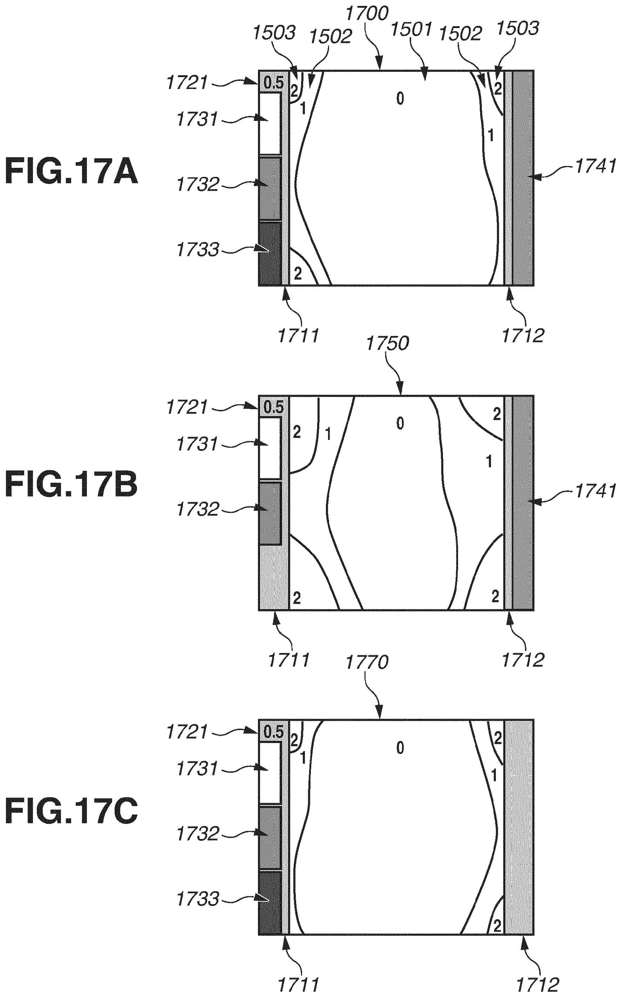

Other examples of the display mode of the result superimposed image will be described with reference to Figs. 17A to 17C. Descriptions of components denoted by the same reference numerals as in Fig. 15 will be omitted, and differences will be described.

Fig. 17A illustrates a result image 1700 that is an example of the case where the imaging resolution determination process, the in-focus degree determination process, and the motion blur determination process are performed and the determination in the motion blur determination process is NG. A left frame region 1711 displays an imaging resolution information region 1721, an imaging resolution determination region 1731, an in-focus degree determination region 1732, and a motion blur determination region 1733. A right frame region 1712 displays an NG determination region 1741. The imaging resolution information region 1721 displays the value of the imaging resolution information obtained in step S1401 (in Fig. 17A, 0.5).

In Fig. 17A, the imaging resolution determination region 1731, the in-focus degree determination region 1732, and the motion blur determination region 1733 are displayed since the three determination processes are performed as described above. The imaging resolution determination region 1731, the in-focus degree determination region 1732, and the motion blur determination region 1733 are displayed in respective different colors. In the present modification, the imaging resolution determination region 1731 is assigned red, the in-focus degree determination region 1732 blue, and the motion blur determination region 1733 yellow.

The NG determination region 1741 in the right frame region 1712 displays the same color as that of the determination region corresponding to the determination process ending with NG. In Fig. 17A, the motion blur determination process ends with NG, and the NG determination region 1741 thus displays the same color as that of the motion blur determination region 1733.

Fig. 17B illustrates a result image 1750 that is an example of the case where the imaging resolution determination process and the in-focus degree determination process are performed, the in-focus degree determination process results in NG, and the motion blur determination processing is not performed. In Fig. 17B, the left frame region 1711 displays the imaging resolution determination region 1731 and the in-focus degree determination region 1732 without the motion blur determination region 1733. The reason is that the imaging resolution determination process and the in-focus degree determination process are performed, the in-focus degree determination process results in NG as described above, and the motion blur determination process is not performed. The NG determination region 1741 in the right frame region 1712 displays the same color as that of the in-focus degree determination region 1732 corresponding to the in-focus degree determination process ending with the NG determination.

Fig. 17C illustrates a result image 1770 that is an example of the case where the imaging resolution determination process, the in-focus degree determination process, and the motion blur determination process are performed and none of the determinations is NG. In Fig. 17C, the left frame region 1711 displays the imaging resolution determination region 1731, the in-focus degree determination region 1732, and the motion blur determination region 1733. The right frame region 1712 does not display the NG determination region 1741.

If the imaging resolution determination is NG, the left frame region 1711 displays only the imaging resolution determination region 1731. The NG determination region 1741 in the right frame region 1712 displays the same color as that of the imaging resolution determination region 1731. Now, suppose that only the in-focus degree determination checkbox 1616a is ON in the determination pattern selection section 1611, the imaging resolution determination is OK, and the in-focus degree determination is also OK. In such a case, the left frame region 1711 displays the imaging resolution determination region 1731 and the in-focus degree determination region 1732. The NG determination region 1741 in the right frame region 1712 does not display anything.

With such a UI, the imaging resolution information can thus be observed on the result image. This enables intuitive observation about which of the imaging resolution, in-focus degree, and motion blur, three determination processes has/have actually been performed can also be observed, and which of the processes has ended with NG. In other words, visualization information for visualizing which of the imaging resolution determination, the in-focus degree determination, and the motion blur determination has/have been performed and which of the executed determinations is determined to not satisfy a predetermined condition can be generated.

Since the imaging resolution determination region 1731, the in-focus degree determination region 1732, and the motion blur determination region 1733 are in colors corresponding to those of the imaging resolution determination symbol 1618, the in-focus degree determination symbol 1619, the motion blur determination symbol 1620 in Fig. 16, the user can also intuitively figure out the relationship between the set determinations and the results on the result superimposed image.

In the present modification, the information processing apparatus 100 is described to include a determination unit having an in-focus degree determination function, a motion blur determination function, and an imaging resolution determination function and be capable of selecting the determination mode. However, the determination unit may include only one or two of the functions. For example, the determination unit may be configured to be able to perform only the imaging resolution determination function among the above-described functions. The determination unit may be configured to be able to perform only the in-focus degree determination function and the imaging resolution determination function. An obtaining unit may have a configuration corresponding to that of the determination unit. Even with such a configuration, the information processing apparatus 100 can determine whether to use a captured image for predetermined image processing based on the image quality of the captured image.

An embodiment of the present invention is directed to determining whether to use a captured image for predetermined image processing based on the image quality of the captured image.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s).

The computer may comprise one or more processors (e.g., central processing unit (CPU), micro processing unit (MPU)) and may include a network of separate computers or separate processors to read out and execute the computer executable instructions.

The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. An information processing apparatus (100) comprising:
obtaining means (101) configured to obtain in-focus degree information indicating an in-focus degree of each predetermined region of an image, frequency analysis information indicating a frequency analysis result of the image, and imaging resolution information indicating imaging resolution;
determination means (101) configured to include a function of determining a ratio of a region where the in-focus degree satisfies a predetermined condition in the image based on the in-focus degree information, a function of determining whether the frequency analysis result satisfies a predetermined condition based on the frequency analysis information, and a function of determining whether the imaging resolution satisfies a predetermined condition based on the imaging resolution information; and
output means (101) configured to output information for specifying that the image is not to be used for predetermined image processing based on a result of a determination made by the determination means (101).
wherein the determination means (101), if a determination whether the imaging resolution satisfies the predetermined condition is made based on the imaging resolution information and in a case where the imaging resolution is found to satisfy the predetermined condition, determines the ratio of the region where the in-focus degree satisfies the predetermined condition in the image based on the in-focus degree information, and if the ratio of the region where the in-focus degree satisfies the predetermined condition in the image is determined based on the in-focus degree information after the determination whether the imaging resolution satisfies the predetermined condition based on the imaging resolution information, and the ratio of the region where the in-focus degree satisfies the predetermined condition in the image is found to satisfy the predetermined condition, determines whether the frequency analysis result satisfies the predetermined condition based on the frequency analysis information.

2. The information processing apparatus (100) according to claim 1,
wherein the determination means (101) includes the function of determining the ratio of the region where the in-focus degree satisfies the predetermined condition to an entire region of the image based on the in-focus degree information.

3. The information processing apparatus (100) according to claim 2, wherein the determination means (101) determines a ratio of a region (803, 823, 1502, 1503) where the in-focus degree exceeds a first threshold.

4. The information processing apparatus (100) according to claim 2 or 3, wherein the determination means (101) determines a ratio of a region (802, 822, 1501) where the image is in focus.

5. The information processing apparatus (100) according to any one of claims 2 to 4, wherein the in-focus degree information is information indicating a defocus amount of each pixel of the image, obtained by a full image plane phase difference image sensor in which each pixel includes two photoelectric conversion units.

6. The information processing apparatus (100) according to any one of claims 2 to 5, wherein, if the ratio determined by the determination means (101) is less than a second threshold, the information output by the output means indicates that the image is not to be used for the predetermined image processing.

7. The information processing apparatus (100) according to any one of claims 2 to 6, wherein the output means (101), if the ratio determined by the determination means (101) exceeds a second threshold, outputs information indicating that the image is to be used for the predetermined image processing.

8. The information processing apparatus (100) according to any one of claims 2 to 7, further comprising means (105) configured to generate visualization information visualizing the in-focus degree of the image based on the in-focus degree information.

9. The information processing apparatus (100) according to claim 8, wherein the output means (101) outputs the information for specifying that the image is not to be used for the predetermined image processing in association with the visualization information.

10. The information processing apparatus (100) according to claim 8 or 9, further comprising means (105) configured to generate visualization information for visualizing whether the function of determining the ratio of the region where the in-focus degree satisfies the predetermined condition to an entire region of the image based on the in-focus degree information is performed.

11. The information processing apparatus (100) according to claim 2, further comprising means (101) configured to generate information for displaying an image indicating the result of the determination made by the determination means (101).

12. The information processing apparatus (100) according to claim 2 to 11, further comprising second setting means (106) configured to set the predetermined condition to an entire region of the function of determining the ratio of the region where the in-focus degree satisfies the predetermined condition to the entire region of the image based on the in-focus degree information.

13. The information processing apparatus (100) according to any one of claims 11 or 12, further comprising first selection means (101) configured to select whether to perform the function of determining the ratio of the region where the in-focus degree satisfies the predetermined condition to the entire region of the image based on the in-focus degree information.

14. The information processing apparatus (100) according to claim 13, further comprising second selection means (101) configured to select whether to perform the function of determining whether the frequency analysis result satisfies the predetermined condition based on the frequency analysis information.

15. The information processing apparatus (100) according to claim 14, wherein the first selection means (101), if the function of determining whether the frequency analysis result satisfies the predetermined condition based on the frequency analysis information is selected to be performed by the second selection means (101), selects to perform the function of determining the ratio of the region where the in-focus degree satisfies the predetermined condition in the image.

16. The information processing apparatus (100) according to any one of claims 1 to 13, wherein the output means (101) outputs information indicating a result of a determination whether the image is to be used for the predetermined image processing based on the result of the determination made by the determination means (101).

17. The information processing apparatus (100) according to any one of claims 1 to 16, wherein the output means (101) outputs information indicating that reimaging is to be performed based on the result of the determination made by the determination means (101).

18. The information processing apparatus (100) according to any one of claims 1 to 17, wherein the output means (101) outputs information indicating an imaging position or an imaging range of the image as information indicating that reimaging is to be performed.

19. The information processing apparatus (100) according to any one of claims 1 to 18,
wherein the image is one of a plurality of captured images of a structure, and
wherein the output means (101) outputs information for highlighting an imaging range of the image in a combined image, which is obtained by combining the plurality of captured images, based on the result of the determination made by the determination means (101).

20. The information processing apparatus (100) according to any one of claims 1 to 19, wherein the output means (101) outputs information for storing a file expressing the image into a predetermined directory based on the result of the determination made by the determination means (101).

21. The information processing apparatus (100) according to any one of claims 1 to 20, wherein the predetermined directory has a name for specifying that the image is not to be used for the predetermined image processing.

22. The information processing apparatus (100) according to any one of claims 1 to 21, further comprising control means configured to control an imaging apparatus to image an imaging range of the image based on the result of the determination made by the determination means (101).

23. The information processing apparatus (100) according to any one of claims 1 to 22, wherein the predetermined image processing is combination processing or processing for detecting a deformation occurring in an object to be imaged.

24. An information processing method comprising:
obtaining (S203, S601, S701) in-focus degree information indicating an in-focus degree of each predetermined region of an image, frequency analysis information indicating a frequency analysis result of the image, and imaging resolution information indicating imaging resolution;
performing (S205, S602-S603, S702-S703) a function of determining a ratio of a region where the in-focus degree satisfies a predetermined condition in the image based on the in-focus degree information,
performing a function of determining whether the frequency analysis result satisfies a predetermined condition based on the frequency analysis information,
performing a function of determining whether the imaging resolution satisfies a predetermined condition based on the imaging resolution information; and
outputting (S705) information for specifying that the image is not to be used for predetermined image processing based on a result of the determining,
wherein, if a determination whether the imaging resolution satisfies the predetermined condition is made based on the imaging resolution information and in a case where the imaging resolution is found to satisfy the predetermined condition, determine the ratio of the region where the in-focus degree satisfies the predetermined condition in the image based on the in-focus degree information, and if the ratio of the region where the in-focus degree satisfies the predetermined condition in the image is determined based on the in-focus degree information after the determination whether the imaging resolution satisfies the predetermined condition based on the imaging resolution information, and the ratio of the region where the in-focus degree satisfies the predetermined condition in the image is found to satisfy the predetermined condition, determines whether the frequency analysis result satisfies the predetermined condition based on the frequency analysis information.

25. A computer program comprising instructions which, when the program is executed by a computer, cause the computer to carry out the method of claim 24.

## Patentansprüche

1. Informationsverarbeitungsvorrichtung (100), umfassend:
eine Erhalteeinrichtung (101), die konfiguriert ist, Schärfegradinformation, die einen Schärfegrad eines jeweiligen vorbestimmten Bereichs eines Bilds angibt, Frequenzanalyseinformation, die ein Frequenzanalyseergebnis des Bilds angibt, und Bildgebungsauflösungsinformation, die eine Bildgebungsauflösung angibt, zu erhalten;
eine Bestimmungseinrichtung (101), die konfiguriert ist, folgendes zu beinhalten: eine Funktion zum Bestimmen eines Anteils eines Bereichs im Bild, in dem der Schärfegrad eine vorbestimmte Bedingung erfüllt, basierend auf der Schärfegradinformation, eine Funktion zum Bestimmen, ob das Frequenzanalyseergebnis eine vorbestimmte Bedingung erfüllt, basierend auf der Frequenzanalyseinformation, und eine Funktion zum Bestimmen, ob die Bildgebungsauflösung eine vorbestimmte Bedingung erfüllt, basierend auf der Bildgebungsauflösungsinformation; und
eine Ausgabeeinrichtung (101), die konfiguriert ist, basierend auf einem Ergebnis einer durch die Bestimmungseinrichtung (101) vorgenommenen Bestimmung Information zum Spezifizieren, dass das Bild nicht für eine vorbestimmte Bildverarbeitung zu verwenden ist, auszugeben,
wobei die Bestimmungseinrichtung (101), wenn eine Bestimmung, ob die Bildgebungsauflösung die vorbestimmte Bedingung erfüllt, basierend auf der Bildgebungsauflösungsinformation vorgenommen wird und in einem Fall, in dem festgestellt wird, dass die Bildgebungsauflösung die vorbestimmte Bedingung erfüllt, den Anteil des Bereichs im Bild, in dem der Schärfegrad die vorbestimmte Bedingung erfüllt, basierend auf der Schärfegradinformation bestimmt, und wenn der Anteil des Bereichs im Bild, in dem der Schärfegrad die vorbestimmte Bedingung erfüllt, nach der auf der Bildgebungsauflösungsinformation basierenden Bestimmung, ob die Bildgebungsauflösung die vorbestimmte Bedingung erfüllt, basierend auf der Schärfegradinformation bestimmt wird und festgestellt wird, dass der Anteil des Bereichs im Bild, in dem der Schärfegrad die vorbestimmte Bedingung erfüllt, die vorbestimmte Bedingung erfüllt, basierend auf der Frequenzanalyseinformation bestimmt, ob das Frequenzanalyseergebnis die vorbestimmte Bedingung erfüllt.

2. Informationsverarbeitungsvorrichtung (100) nach Anspruch 1,
wobei die Bestimmungseinrichtung (101) die Funktion zum Bestimmen des Anteils des Bereichs, in dem der Schärfegrad die vorbestimmte Bedingung erfüllt, zu einem gesamten Bereich des Bilds basierend auf der Schärfegradinformation beinhaltet.

3. Informationsverarbeitungsvorrichtung (100) nach Anspruch 2, wobei die Bestimmungseinrichtung (101) einen Anteil eines Bereichs (803, 823, 1502, 1503) bestimmt, in dem der Schärfegrad einen ersten Schwellenwert überschreitet.

4. Informationsverarbeitungsvorrichtung (100) nach Anspruch 2 oder 3, wobei die Bestimmungseinrichtung (101) einen Anteil eines Bereichs (802, 822, 1501) bestimmt, in dem das Bild scharf ist.

5. Informationsverarbeitungsvorrichtung (100) nach einem der Ansprüche 2 bis 4, wobei die Schärfegradinformation Information ist, die einen Unschärfebetrag eines jeweiligen Pixels des Bilds angibt, die durch einen Phasendifferenz-Bildsensor in der gesamten Bildebene erhalten wird, in dem ein jeweiliges Pixel zwei photoelektrische Umwandlungseinheiten beinhaltet.

6. Informationsverarbeitungsvorrichtung (100) nach einem der Ansprüche 2 bis 5, wobei, wenn der durch die Bestimmungseinrichtung (101) bestimmte Anteil kleiner als ein zweiter Schwellenwert ist, die durch die Ausgabeeinrichtung ausgegebene Information angibt, dass das Bild nicht für die vorbestimmte Bildverarbeitung zu verwenden ist.

7. Informationsverarbeitungsvorrichtung (100) nach einem der Ansprüche 2 bis 6, wobei die Ausgabeeinrichtung (101), wenn der durch die Bestimmungseinrichtung (101) bestimmte Anteil einen zweiten Schwellenwert überschreitet, Information ausgibt, die angibt, dass das Bild für die vorbestimmte Bildverarbeitung zu verwenden ist.

8. Informationsverarbeitungsvorrichtung (100) nach einem der Ansprüche 2 bis 7, ferner umfassend eine Einrichtung (105), die konfiguriert ist, Visualisierungsinformation zu erzeugen, die den Schärfegrad des Bilds basierend auf der Schärfegradinformation visualisiert.

9. Informationsverarbeitungsvorrichtung (100) nach Anspruch 8, wobei die Ausgabeeinrichtung (101) die Information zum Spezifizieren, dass das Bild nicht für die vorbestimmte Bildverarbeitung zu verwenden ist, in Verbindung mit der Visualisierungsinformation ausgibt.

10. Informationsverarbeitungsvorrichtung (100) nach Anspruch 8 oder 9, ferner umfassend eine Einrichtung (105), die konfiguriert ist, Visualisierungsinformation zu erzeugen, um zu visualisieren, ob die Funktion zum Bestimmen des Anteils des Bereichs, in dem der Schärfegrad die vorbestimmte Bedingung erfüllt, an einem gesamten Bereich des Bilds basierend auf der Schärfegradinformation durchgeführt wird.

11. Informationsverarbeitungsvorrichtung (100) nach Anspruch 2, ferner umfassend eine Einrichtung (101), die konfiguriert ist, Information zum Anzeigen eines Bilds zu erzeugen, das das Ergebnis der durch die Bestimmungseinrichtung (101) vorgenommenen Bestimmung angibt.

12. Informationsverarbeitungsvorrichtung (100) nach Anspruch 2 bis 11, ferner umfassend eine zweite Einstelleinrichtung (106), die konfiguriert ist, basierend auf der Schärfegradinformation die vorbestimmte Bedingung auf einen gesamten Bereich der Funktion zum Bestimmen des Anteils des Bereichs, in dem der Schärfegrad die vorbestimmte Bedingung erfüllt, am gesamten Bereich des Bilds einzustellen.

13. Informationsverarbeitungsvorrichtung (100) nach einem der Ansprüche 11 oder 12, ferner umfassend eine erste Auswahleinrichtung (101), die konfiguriert ist, basierend auf der Schärfegradinformation auszuwählen, ob die Funktion zum Bestimmen des Anteils des Bereichs, in dem der Schärfegrad die vorbestimmte Bedingung erfüllt, am gesamten Bereich des Bilds durchgeführt werden soll.

14. Informationsverarbeitungsvorrichtung (100) nach Anspruch 13, ferner umfassend eine zweite Auswahleinrichtung (101), die konfiguriert ist, basierend auf der Frequenzanalyseinformation auszuwählen, ob die Funktion zum Bestimmen, ob das Frequenzanalyseergebnis die vorbestimmte Bedingung erfüllt, durchgeführt werden soll.

15. Informationsverarbeitungsvorrichtung (100) nach Anspruch 14, wobei die erste Auswahleinrichtung (101), wenn ausgewählt wird, dass die Funktion zum auf der Frequenzanalyseinformation basierenden Bestimmen, ob das Frequenzanalyseergebnis die vorbestimmte Bedingung erfüllt, durch die zweite Auswahleinrichtung (101) durchgeführt werden soll, Durchführen der Funktion zum Bestimmen des Anteils des Bereichs im Bild, in dem der Schärfegrad die vorbestimmte Bedingung erfüllt, auswählt.

16. Informationsverarbeitungsvorrichtung (100) nach einem der Ansprüche 1 bis 13, wobei die Ausgabeeinrichtung (101) basierend auf dem Ergebnis der durch die Bestimmungseinrichtung (101) vorgenommenen Bestimmung Information ausgibt, die ein Ergebnis einer Bestimmung angibt, ob das Bild für die vorbestimmte Bildverarbeitung zu verwenden ist.

17. Informationsverarbeitungsvorrichtung (100) nach einem der Ansprüche 1 bis 16, wobei die Ausgabeeinrichtung (101) basierend auf dem Ergebnis der durch die Bestimmungseinrichtung (101) vorgenommenen Bestimmung Information ausgibt, die angibt, dass eine erneute Bildgebung durchgeführt werden soll.

18. Informationsverarbeitungsvorrichtung (100) nach einem der Ansprüche 1 bis 17, wobei die Ausgabeeinrichtung (101) Information, die eine Bildgebungsposition oder einen Bildgebungsbereich des Bilds angibt, als Information ausgibt, die angibt, dass eine erneute Bildgebung durchgeführt werden soll.

19. Informationsverarbeitungsvorrichtung (100) nach einem der Ansprüche 1 bis 18,
wobei das Bild eines von mehreren aufgenommenen Bildern einer Struktur ist, und
wobei die Ausgabeeinrichtung (101) basierend auf dem Ergebnis der durch die Bestimmungseinrichtung (101) vorgenommenen Bestimmung Information zum Hervorheben eines Bildgebungsbereichs des Bilds in einem durch Kombinieren der mehreren aufgenommenen Bilder erhaltenen kombinierten Bild ausgibt.

20. Informationsverarbeitungsvorrichtung (100) nach einem der Ansprüche 1 bis 19, wobei die Ausgabeeinrichtung (101) basierend auf dem Ergebnis der durch die Bestimmungseinrichtung (101) vorgenommenen Bestimmung Information zum Speichern einer das Bild ausdrückenden Datei in einem vorbestimmten Verzeichnis ausgibt.

21. Informationsverarbeitungsvorrichtung (100) nach einem der Ansprüche 1 bis 20, wobei das vorbestimmte Verzeichnis einen Namen aufweist, um zu spezifizieren, dass das Bild nicht für die vorbestimmte Bildverarbeitung zu verwenden ist.

22. Informationsverarbeitungsvorrichtung (100) nach einem der Ansprüche 1 bis 21, ferner umfassend eine Steuereinrichtung, die konfiguriert ist, basierend auf dem Ergebnis der durch die Bestimmungseinrichtung (101) vorgenommenen Bestimmung eine Bildgebungsvorrichtung zu steuern, einen Bildgebungsbereich des Bilds abzubilden.

23. Informationsverarbeitungsvorrichtung (100) nach einem der Ansprüche 1 bis 22, wobei die vorbestimmte Bildverarbeitung eine Kombinationsverarbeitung oder eine Verarbeitung zum Detektieren einer in einem abzubildenden Objekt auftretenden Verformung ist.

24. Informationsverarbeitungsverfahren, umfassend:
Erhalten (S203, S601, S701) von Schärfegradinformation, die einen Schärfegrad eines jeweiligen vorbestimmten Bereichs eines Bilds angibt, Frequenzanalyseinformation, die ein Frequenzanalyseergebnis des Bilds angibt, und Bildgebungsauflösungsinformation, die eine Bildgebungsauflösung angibt;
Durchführen (S205, S602-S603, S702-S703) einer Funktion zum Bestimmen eines Anteils eines Bereichs im Bild, in dem der Schärfegrad eine vorbestimmte Bedingung erfüllt, basierend auf der Schärfegradinformation;
Durchführen einer Funktion zum Bestimmen, ob das Frequenzanalyseergebnis eine vorbestimmte Bedingung erfüllt, basierend auf der Frequenzanalyseinformation;
Durchführen einer Funktion zum Bestimmen, ob die Bildgebungsauflösung eine vorbestimmte Bedingung erfüllt, basierend auf der Bildgebungsauflösungsinformation; und
Ausgeben (S705) von Information zum Spezifizieren, dass das Bild nicht für eine vorbestimmte Bildverarbeitung zu verwenden ist, basierend auf einem Ergebnis der Bestimmung,
wobei, wenn eine Bestimmung, ob die Abbildungsauflösung die vorbestimmte Bedingung erfüllt, basierend auf der Abbildungsauflösungsinformation vorgenommen wird, und in einem Fall, in dem festgestellt wird, dass die Abbildungsauflösung die vorbestimmte Bedingung erfüllt, der Anteil des Bereichs im Bild, in dem der Schärfegrad die vorbestimmte Bedingung erfüllt, basierend auf der Schärfegradinformation bestimmt wird, und wenn der Anteil des Bereichs im Bild, in dem der Schärfegrad die vorbestimmte Bedingung erfüllt, nach der auf der Abbildungsauflösungsinformation basierenden Bestimmung, ob die Abbildungsauflösung die vorbestimmte Bedingung erfüllt, basierend auf der Schärfegradinformation bestimmt wird und festgestellt wird, dass der Anteil des Bereichs im Bild, in dem der Schärfegrad die vorbestimmte Bedingung erfüllt, die vorbestimmte Bedingung erfüllt, basierend auf der Frequenzanalyseinformation bestimmt wird, ob das Frequenzanalyseergebnis die vorbestimmte Bedingung erfüllt.

25. Computerprogramm, umfassend Anweisungen, die, wenn das Programm von einem Computer ausgeführt wird, den Computer veranlassen, das Verfahren nach Anspruch 24 auszuführen.

## Revendications

1. Appareil de traitement d'informations (100) comprenant :
un moyen d'obtention (101) configuré pour obtenir des informations de degré de mise au point indiquant un degré de mise au point de chaque région prédéterminée d'une image, des informations d'analyse de fréquence indiquant un résultat d'analyse de fréquence de l'image, et des informations de résolution d'imagerie indiquant une résolution d'imagerie ;
un moyen de détermination (101) configuré pour comporter une fonction de détermination d'un taux d'une région où le degré de mise au point satisfait à une condition prédéterminée dans l'image sur la base des informations de degré de mise au point, une fonction de détermination du fait que le résultat d'analyse de fréquence satisfait ou non à une condition prédéterminée sur la base des informations d'analyse de fréquence, et une fonction de détermination du fait que la résolution d'imagerie satisfait ou non à une condition prédéterminée sur la base des informations de résolution d'imagerie ; et
un moyen de sortie (101) configuré pour délivrer en sortie des informations pour spécifier que l'image ne doit pas être utilisée pour un traitement d'image prédéterminé sur la base d'un résultat d'une détermination effectuée par le moyen de détermination (101).
dans lequel le moyen de détermination (101), si une détermination du fait que la résolution d'imagerie satisfait ou non à la condition prédéterminée est effectuée sur la base des informations de résolution d'imagerie et dans un cas où la résolution d'imagerie est reconnue comme satisfaisant à la condition prédéterminée, détermine le taux de la région où le degré de mise au point satisfait à la condition prédéterminée dans l'image sur la base des informations de degré de mise au point, et si le taux de la région où le degré de mise au point satisfait à la condition prédéterminée dans l'image est déterminé sur la base des informations de degré de mise au point après la détermination du fait que la résolution d'imagerie satisfait ou non à la condition prédéterminée sur la base des informations de résolution d'imagerie, et que le taux de la région où le degré de mise au point satisfait à la condition prédéterminée dans l'image est reconnu comme satisfaisant à la condition prédéterminée, détermine si le résultat de l'analyse de fréquence satisfait ou non à la condition prédéterminée sur la base des informations d'analyse de fréquence.

2. Appareil de traitement d'informations (100) selon la revendication 1,
dans lequel le moyen de détermination (101) comporte la fonction de détermination du taux de la région où le degré de mise au point satisfait à la condition prédéterminée par rapport à une région entière de l'image sur la base des informations de degré de mise au point.

3. Appareil de traitement d'informations (100) selon la revendication 2, dans lequel le moyen de détermination (101) détermine un taux d'une région (803, 823, 1502, 1503) où le degré de mise au point dépasse un premier seuil.

4. Appareil de traitement d'informations (100) selon la revendication 2 ou 3, dans lequel le moyen de détermination (101) détermine un taux d'une région (802, 822, 1501) où l'image est mise au point.

5. Appareil de traitement d'informations (100) selon l'une quelconque des revendications 2 à 4, dans lequel les informations de degré de mise au point sont des informations indiquant une quantité de défocalisation de chaque pixel de l'image, obtenues par un capteur d'image de différence de phase de plan d'image complet dans lequel chaque pixel comporte deux unités de conversion photoélectrique.

6. Appareil de traitement d'informations (100) selon l'une quelconque des revendications 2 à 5, dans lequel, si le taux déterminé par le moyen de détermination (101) est inférieur à un second seuil, les informations délivrées par le moyen de sortie indiquent que l'image ne doit pas être utilisée pour le traitement d'image prédéterminé.

7. Appareil de traitement d'informations (100) selon l'une quelconque des revendications 2 à 6, dans lequel le moyen de sortie (101), si le taux déterminé par le moyen de détermination (101) dépasse un second seuil, délivre en sortie des informations indiquant que l'image doit être utilisée pour le traitement d'image prédéterminé.

8. Appareil de traitement d'informations (100) selon l'une quelconque des revendications 2 à 7, comprenant en outre un moyen (105) configuré pour générer des informations de visualisation visualisant le degré de mise au point de l'image sur la base des informations de degré de mise au point.

9. Appareil de traitement d'informations (100) selon la revendication 8, dans lequel le moyen de sortie (101) délivre en sortie les informations pour spécifier que l'image ne doit pas être utilisée pour le traitement d'image prédéterminé en association avec les informations de visualisation.

10. Appareil de traitement d'informations (100) selon la revendication 8 ou 9, comprenant en outre un moyen (105) configuré pour générer des informations de visualisation pour visualiser si la fonction de détermination du taux de la région où le degré de mise au point satisfait à la condition prédéterminée par rapport à une région entière de l'image sur la base des informations de degré de mise au point est effectuée.

11. Appareil de traitement d'informations (100) selon la revendication 2, comprenant en outre un moyen (101) configuré pour générer des informations pour afficher une image indiquant le résultat de la détermination effectuée par le moyen de détermination (101).

12. Appareil de traitement d'informations (100) selon la revendication 2 à 11, comprenant en outre un second moyen de réglage (106) configuré pour régler la condition prédéterminée sur une région entière de la fonction de détermination du taux de la région où le degré de mise au point satisfait à la condition prédéterminée par rapport à la région entière de l'image sur la base des informations de degré de mise au point.

13. Appareil de traitement d'informations (100) selon l'une quelconque des revendications 11 ou 12, comprenant en outre un premier moyen de choix (101) configuré pour choisir s'il faut effectuer la fonction de détermination du taux de la région où le degré de mise au point satisfait à la condition prédéterminée par rapport à l'ensemble de la région de l'image sur la base des informations de degré de mise au point.

14. Appareil de traitement d'informations (100) selon la revendication 13, comprenant en outre un second moyen de choix (101) configuré pour choisir s'il faut effectuer ou non la fonction de détermination du fait que le résultat d'analyse de fréquence satisfait ou non à la condition prédéterminée sur la base des informations d'analyse de fréquence.

15. Appareil de traitement d'informations (100) selon la revendication 14, dans lequel le premier moyen de choix (101), si la fonction de détermination du fait que le résultat d'analyse de fréquence satisfait ou non à la condition prédéterminée sur la base des informations d'analyse de fréquence est choisie pour être effectuée par le second moyen de choix (101), choisit d'effectuer la fonction de détermination du taux de la région où le degré de mise au point satisfait à la condition prédéterminée dans l'image.

16. Appareil de traitement d'informations (100) selon l'une quelconque des revendications 1 à 13, dans lequel le moyen de sortie (101) délivre des informations indiquant un résultat d'une détermination du fait que l'image doit ou non être utilisée pour le traitement d'image prédéterminé sur la base du résultat de la détermination effectuée par le moyen de détermination (101).

17. Appareil de traitement d'informations (100) selon l'une quelconque des revendications 1 à 16, dans lequel le moyen de sortie (101) délivre en sortie des informations indiquant que la réimagerie doit être effectuée sur la base du résultat de la détermination effectuée par le moyen de détermination (101).

18. Appareil de traitement d'informations (100) selon l'une quelconque des revendications 1 à 17, dans lequel le moyen de sortie (101) délivre en sortie des informations indiquant une position d'imagerie ou une plage d'imagerie de l'image en tant qu'informations indiquant que la réimagerie doit être effectuée.

19. Appareil de traitement d'informations (100) selon l'une quelconque des revendications 1 à 18,
dans lequel l'image est l'une parmi une pluralité d'images capturées d'une structure, et
dans lequel le moyen de sortie (101) délivre des informations pour mettre en évidence une plage d'imagerie de l'image dans une image combinée, qui est obtenue en combinant la pluralité d'images capturées, sur la base du résultat de la détermination effectuée par le moyen de détermination (101).

20. Appareil de traitement d'informations (100) selon l'une quelconque des revendications 1 à 19, dans lequel le moyen de sortie (101) délivre des informations pour stocker un fichier exprimant l'image dans un répertoire prédéterminé sur la base du résultat de la détermination effectuée par le moyen de détermination (101).

21. Appareil de traitement d'informations (100) selon l'une quelconque des revendications 1 à 20, dans lequel le répertoire prédéterminé a un nom pour spécifier que l'image ne doit pas être utilisée pour le traitement d'image prédéterminé.

22. Appareil de traitement d'informations (100) selon l'une quelconque des revendications 1 à 21, comprenant en outre un moyen de commande configuré pour commander un appareil d'imagerie pour imager une plage d'imagerie de l'image sur la base du résultat de la détermination effectuée par le moyen de détermination (101).

23. Appareil de traitement d'informations (100) selon l'une quelconque des revendications 1 à 22, dans lequel le traitement d'image prédéterminé est un traitement combiné ou un traitement pour détecter une déformation survenant dans un objet à imager.

24. Procédé de traitement d'informations comprenant :
l'obtention (S203, S601, S701) d'informations de degré de mise au point indiquant un degré de mise au point de chaque région prédéterminée d'une image, d'informations d'analyse de fréquence indiquant un résultat d'analyse de fréquence de l'image et d'informations de résolution d'imagerie indiquant une résolution d'imagerie ;
la réalisation (S205, S602-S603, S702-S703) d'une fonction de détermination d'un taux d'une région où le degré de mise au point satisfait à une condition prédéterminée dans l'image sur la base des informations de degré de mise au point,
la réalisation d'une fonction de détermination du fait que le résultat d'analyse de fréquence satisfait ou non à une condition prédéterminée sur la base des informations d'analyse de fréquence,
la réalisation d'une fonction de détermination du fait que la résolution d'imagerie satisfait ou non à une condition prédéterminée sur la base des informations de résolution d'imagerie ; et
la délivrance en sortie (S705) d'informations pour spécifier que l'image ne doit pas être utilisée pour un traitement d'image prédéterminé sur la base d'un résultat de la détermination,
dans lequel, si une détermination du fait que la résolution d'imagerie satisfait ou non à la condition prédéterminée est effectuée sur la base des informations de résolution d'imagerie et dans un cas où la résolution d'imagerie est reconnue comme satisfaisant à la condition prédéterminée, on détermine le taux de la région où le degré de mise au point satisfait à la condition prédéterminée dans l'image sur la base des informations de degré de mise au point, et si le taux de la région où le degré de mise au point satisfait à la condition prédéterminée dans l'image est déterminé sur la base des informations de degré de mise au point après la détermination du fait que la résolution d'imagerie satisfait ou non à la condition prédéterminée sur la base des informations de résolution d'imagerie, et que le taux de la région où le degré de mise au point satisfait à la condition prédéterminée dans l'image est reconnu comme satisfaisant à la condition prédéterminée, il est déterminé si le résultat de l'analyse de fréquence satisfait ou non à la condition prédéterminée sur la base des informations d'analyse de fréquence.

25. Programme informatique comprenant des instructions qui, lorsque le programme est exécuté par un ordinateur, amènent l'ordinateur à mettre en œuvre le procédé selon la revendication 24.
